# EUROPEAN PATENT SPECIFICATION

(11) **EP 2 789 924 B1**
(45) Date of publication and mention of the grant of the patent: **14.06.2017**
(21) Application number: 12846797.4
(22) Date of filing: 22.11.2012
(51) Int. Cl.: F24D 10/00, F24D 3/00

(54) **HEATING SYSTEM AND HEATING SYSTEM CONTROL METHOD**
HEIZSYSTEM UND STEUERVERFAHREN FÜR DAS HEIZSYSTEM
SYSTÈME DE CHAUFFAGE ET PROCÉDÉ DE COMMANDE DE SYSTÈME CHAUFFAGE

(30) Priority: 06.12.2011 JP 2011266935
(43) Date of publication of application: 15.10.2014
(73) Proprietor: Panasonic Intellectual Property Management Co., Ltd., Osaka-shi, Osaka 540-6207 (JP)
(72) Inventor: KAKIMOTO, Atsushi, Osaka 540-6207 (JP)
(74) Representative: Grünecker Patent- und Rechtsanwälte PartG mbB
(86) International application number: PCT/JP2012/007524
(87) International publication number: WO 2013/084435

(56) References cited:
- WO-A1-2010/145040
- DE-A1- 2 809 770
- DE-A1- 4 221 094
- GB-A- 2 478 181
- JP-A- H1 054 590
- JP-A- S5 585 842
- JP-A- H01 134 133
- JP-A- H04 131 600

## Description

### [Technical Field]

The present invention relates to methods of controlling heating systems that use hot water, and particularly to a method of controlling a heating system that includes a plurality of heating devices such as radiators and floor heaters.

### [Background Art]

Patent Literature 1 discloses a conventional hot-water heating device. The hot-water heating device disclosed in Patent Literature 1 controls a room temperature of each room by supplying hot water from a boiler to a radiator provided for the room. The flow rate of hot water to be supplied to the radiator can be adjusted by a valve. The valve includes a radio receiver and adjusts the flow rate of hot water according to a radio signal received from a remote control.

DE 28 09 770 A1 relates to a method and a system for influencing room temperature. GB 2 478 181 A relates to a controller for use with a heat supply unit which supplies heat to a heating system.

### [Citation List]

### [Patent Literature]

[PTL 1] DE4221094A1

### [Summary of Invention]

### [Technical Problem]

Patent Literature 1, however, only discloses that the temperatures of the rooms can be individually controlled and does not disclose heat control for overall optimization of a housing complex.

In view of this, the present invention has an object to provide a heating system and a heating-system control method that reduce a total amount of heat consumption and also maintain the comfort level of each room.

### [Solution to Problem]

The heating-system control method in an aspect according to the present invention is a heating-system control method of controlling heating devices each of which is provided in a different one of rooms to heat the room by radiating heat generated by a heat supply source. To be more specific, the heating-system control method includes: obtaining, from the heat supply source, a heat radiation reduction instruction to reduce heat radiation of the heating devices during a heat radiation reduction period from a heat radiation reduction start time to a heat radiation reduction end time; predicting a change in a room temperature which is to occur during the heat radiation reduction period, for each of the rooms; determining, based on the change in the room temperature predicted in the predicting, a pre-shutoff accumulated temperature that allows the room temperature of the room to reach a predetermined target temperature at the heat radiation reduction end time, the pre-shutoff accumulated temperature being the room temperature of the room at the heat radiation reduction start time; and causing each of the heating devices (i) to radiate heat in order for the room temperature of the room to reach the pre-shutoff accumulated temperature determined for the room in the determining, during a pre-shutoff heat accumulation period from when the heat radiation reduction instruction is obtained to the heat radiation reduction start time and (ii) to stop heat radiation at the heat radiation reduction start time.

As described above, since heat radiation of all the heating devices are stopped according to the request from the heat supply source, the peak of heat consumption can be reduced. Moreover, in advance of stopping heat radiation of the heating devices, each of the room temperatures of the rooms is increased up to the pre-shutoff accumulated temperature determined for each of the rooms. This can prevent the room temperature of the room from decreasing excessively while heat radiation is stopped. With this, while the level of user comfort is maintained, the peak of heat consumption can be reduced.

Moreover, in the obtaining, a rate of temperature increase during the pre-shutoff heat accumulation period may be further obtained. In the determining, a heat accumulation start time may be further determined for each of the rooms, the heat accumulation start time allowing the room temperature of the room to reach the pre-shutoff accumulated temperature before the heat radiation reduction start time when the room temperature of the room is increased at the rate of temperature increase obtained in the obtaining. In the causing, each of the heating devices may be caused to start heat radiation at the heat accumulation start time determined for the room, and an amount of heat radiation is controlled to allow the room temperature of the room to increase at the rate of temperature increase obtained for the room.

Furthermore, in the causing, each of the heating devices may be further caused to radiate heat to allow the room temperature of the room to be maintained at the pre-shutoff accumulated temperature from when the room temperature of the room reaches the pre-shutoff accumulated temperature to the heat radiation reduction start time.

Alternatively, in the determining, the heat accumulation start time may be determined for each of the rooms to allow the room temperature of the room to reach, at the heat radiation reduction start time, the pre-shutoff accumulated temperature determined for the room.

Moreover, in the obtaining, the room temperature of the room during the pre-shutoff heat accumulation period may be further obtained for each of the rooms per unit of time. In the causing, when the room temperature of the room obtained in the obtaining deviates from, during the pre-shutoff heat accumulation period, the change in the room temperature determined from the rate of temperature increase, the amount of heat radiation may be corrected to allow the room temperature of the room to closely follow the change in the room temperature.

Furthermore, in the causing, when the room temperature of the room obtained in the obtaining falls below, during the heat radiation reduction period, the change in the room temperature predicted in the predicting, the heating device may be further caused to radiate heat to allow the room temperature of the room to closely follow the change in the room temperature.

With the above process, the amount of heat radiation is adjusted so as to allow the room temperature of the room to be closer to the predicted temperature value. As a result, the actual change in the room temperature can be prevented from being significantly different from the predicted value. Thus, comfort loss can be effectively prevented.

Moreover, each of the target temperatures of the rooms may be set lower than a preset temperature of the heating device included in the room. In the causing, each of the heating devices may be further caused to resume heat radiation at the heat radiation reduction end time to allow the room temperature of the room to increase from the target temperature to the preset temperature.

With the above process, as compared to the case where the target temperature is set at the same value as the preset temperature, a part of the amount of heat to be radiated during the pre-shutoff heat accumulation period is allocated for a period after the heat radiation reduction end time. As a result, a peak in the total heat radiation can be prevented from occurring immediately before the heat radiation reduction end time.

Furthermore, in the obtaining, an outside temperature and each of the room temperatures of the rooms may be further obtained. In the predicting, the change in the room temperature during the heat radiation reduction period may be predicted for each of the rooms based on (i) the outside temperature and the room temperature obtained in the obtaining and (ii) a heat insulation performance of the room.

Moreover, in the determining, the pre-shutoff accumulated temperature may be determined based on the change in the room temperature predicted in the predicting and the target temperature.

Furthermore, each of the heating devices may include a valve that increases or decreases an amount of heat to be supplied from the heat supply source. In the causing, the amount of heat radiation of the heating device may be controlled by changing an opening degree of the valve.

The heating system in an aspect according to the present invention is a heating system which controls heating devices each of which is provided in a different one of rooms to heat the room by radiating heat generated by a heat supply source. To be more specific, the heating system includes: an obtainment unit which obtains, from the heat supply source, a heat radiation reduction instruction to reduce heat radiation of the heating devices during a heat radiation reduction period from a heat radiation reduction start time to a heat radiation reduction end time; a prediction unit which predicts a change in a room temperature to occur during the heat radiation reduction period, for each of the rooms; an operation planning unit which determines, based on the change in the room temperature predicted by the prediction unit, a pre-shutoff accumulated temperature that allows the room temperature of the room to reach a predetermined target temperature at the heat radiation reduction end time, the pre-shutoff accumulated temperature being the room temperature of the room at the heat radiation reduction start time; and a heating-device control unit which causes each of the heating devices (i) to radiate heat in order for the room temperature of the room to reach the pre-shutoff accumulated temperature determined for the room by the operation planning unit, during a pre-shutoff heat accumulation period from when the heat radiation reduction instruction is obtained to the heat radiation reduction start time and (ii) to stop heat radiation at the heat radiation reduction start time.

Moreover, the heating system may include: a heating-system control unit including the obtainment unit, the prediction unit, and the operation planning unit; and the heating-device control unit provided for each of the rooms.

### [Advantageous Effects of Invention]

With the present invention, while the comfort levels of rooms can be improved individually according to characteristics of the rooms, the total heat consumption of the whole heating system can be reduced. Hence, while the user comfort level is maintained, the peak of heat consumption can be reduced.

### [Brief Description of Drawings]

[Fig. 1]

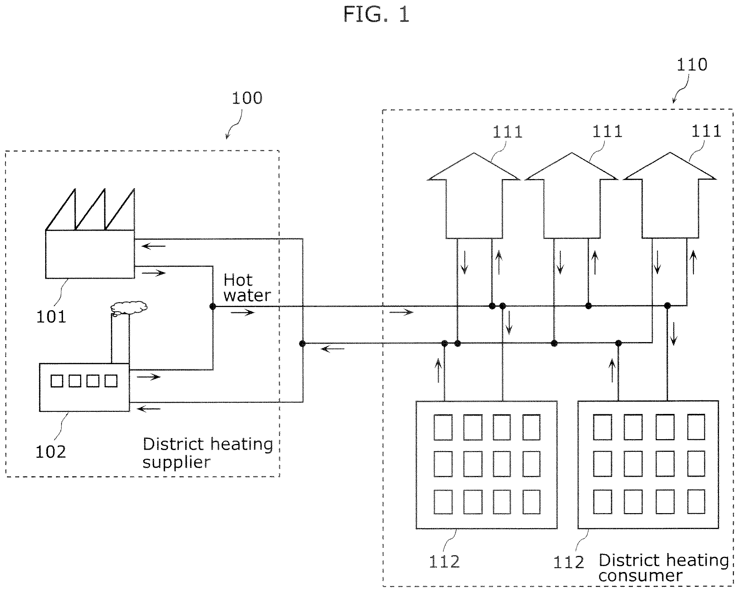

   FIG. 1 is a schematic diagram explaining the working of district heating supply.
[Fig. 2A]

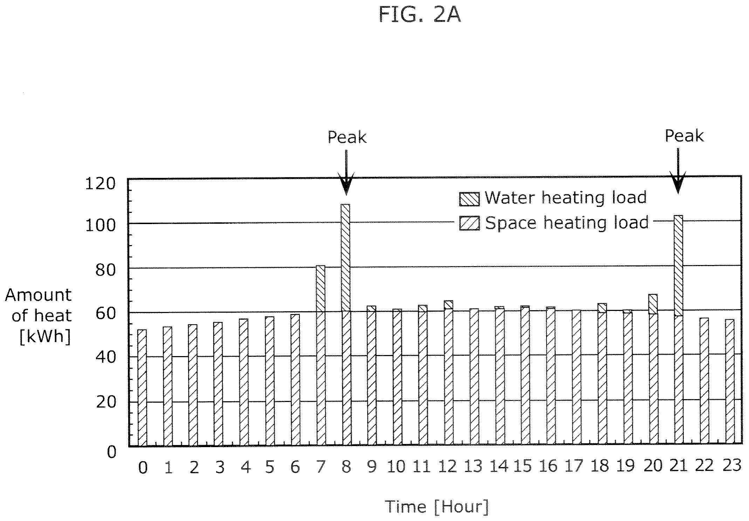

   FIG. 2A is a diagram showing changes in the amount of heat consumed by a district heating consumer.
[Fig. 2B]

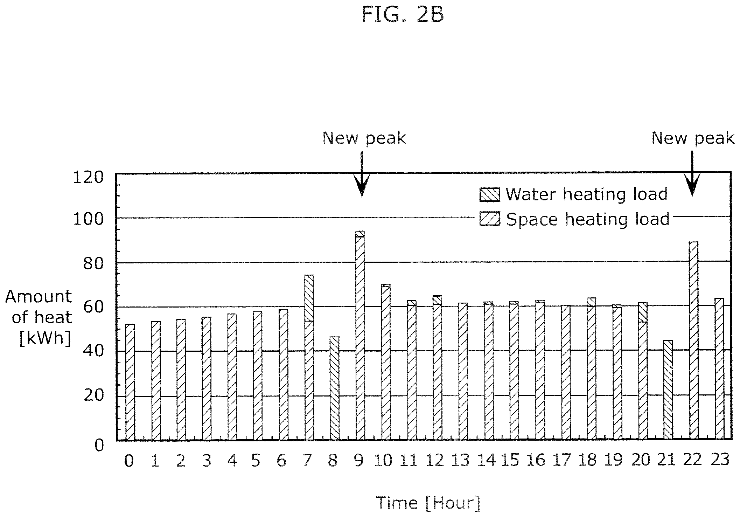

   FIG. 2B is a diagram showing changes in the amount of heat consumed in the case where heating devices are stopped during peak time periods shown in FIG. 2A.
[Fig. 3]

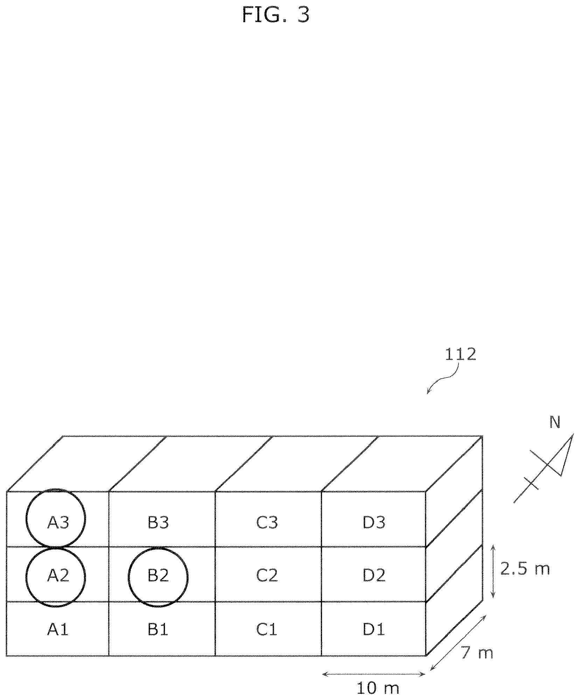

   FIG. 3 is a diagram showing an example of a housing complex.
[Fig. 4]

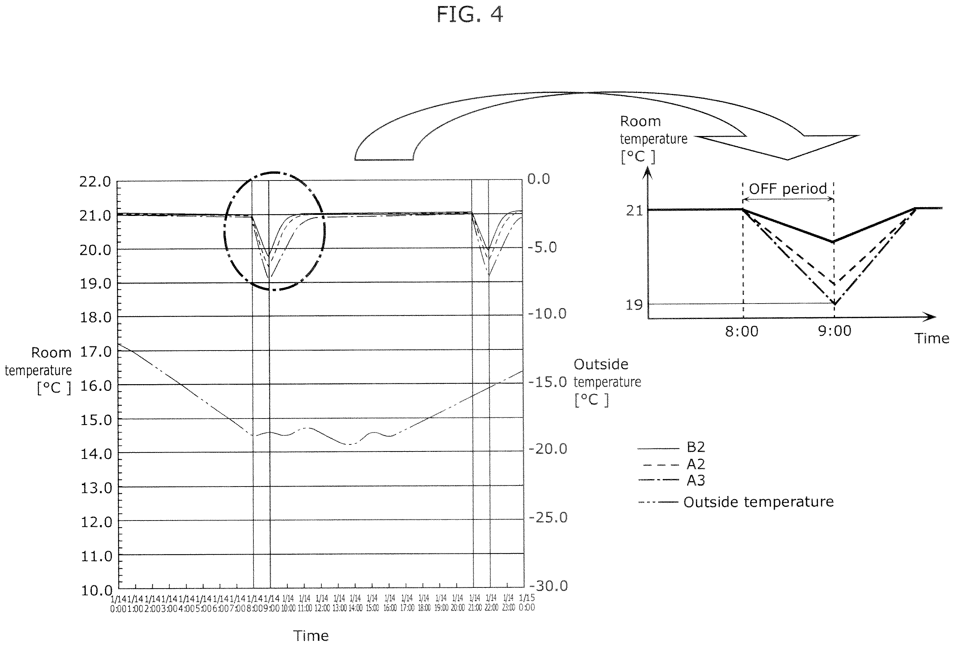

   FIG. 4 is a diagram showing changes in the room temperature for each of rooms included in the housing complex shown in FIG. 3.
[Fig. 5]

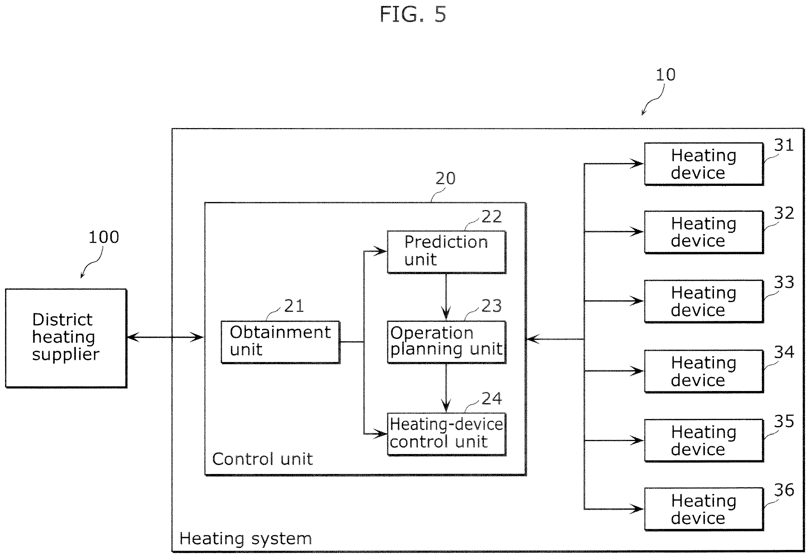

   FIG. 5 is a schematic block diagram showing a heating system in an aspect according to the present invention.
[Fig. 6A]

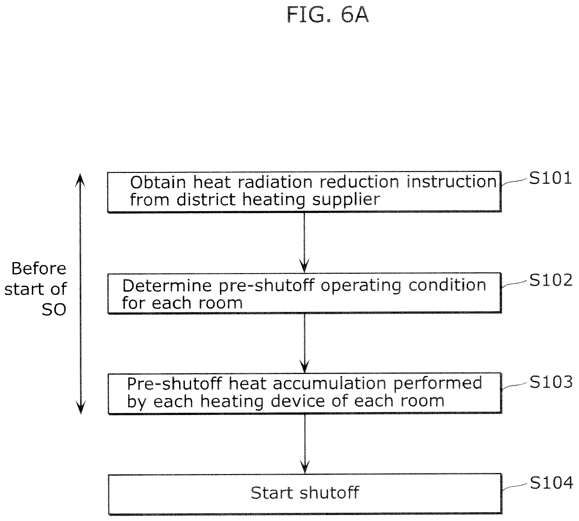

   FIG. 6A is a flowchart showing a process of controlling the heating system in an aspect according to the present invention.
[Fig. 6B]

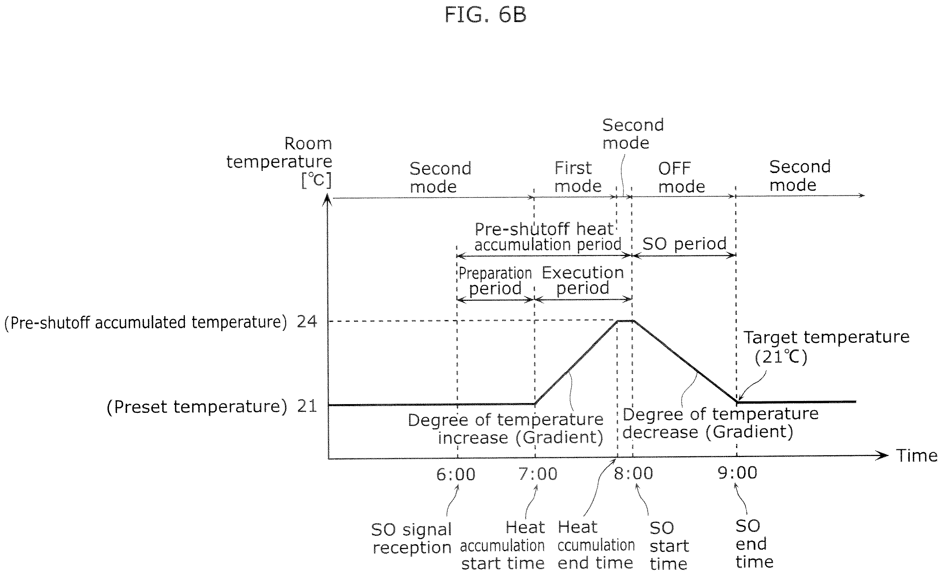

   FIG. 6B is a diagram showing an example of changes in the room temperature in the case where the process shown in FIG. 6A is performed.
[Fig. 7A]

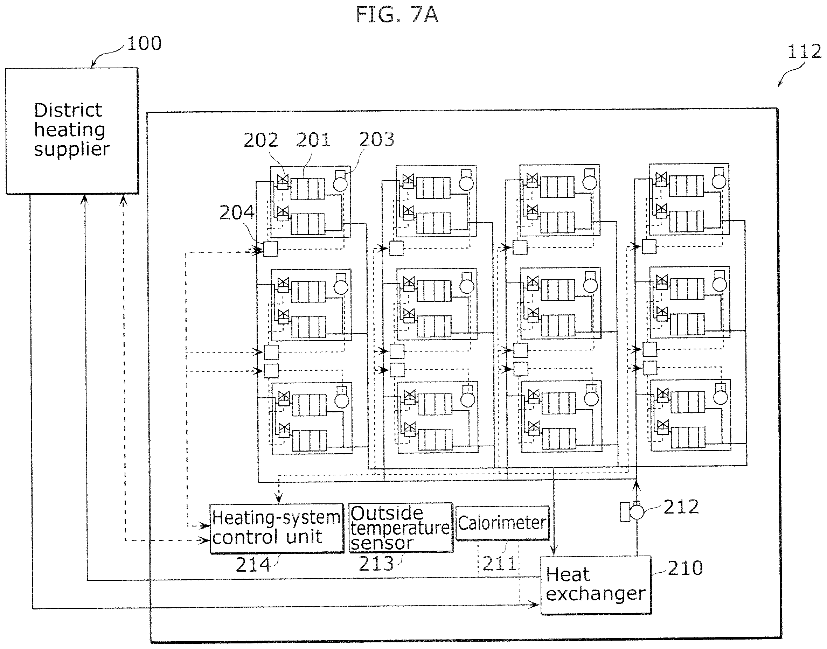

   FIG. 7A is a diagram showing an example of a facility that is included in the housing complex and necessary to heat each room with hot water supplied from the district heating supplier.
[Fig. 7B]

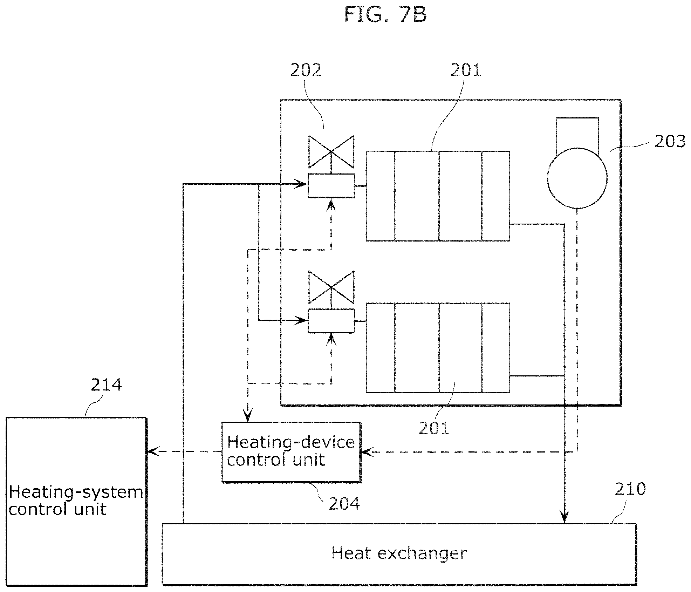

   FIG. 7B is an enlarged view of one of the rooms shown in FIG. 7A.
[Fig. 8]

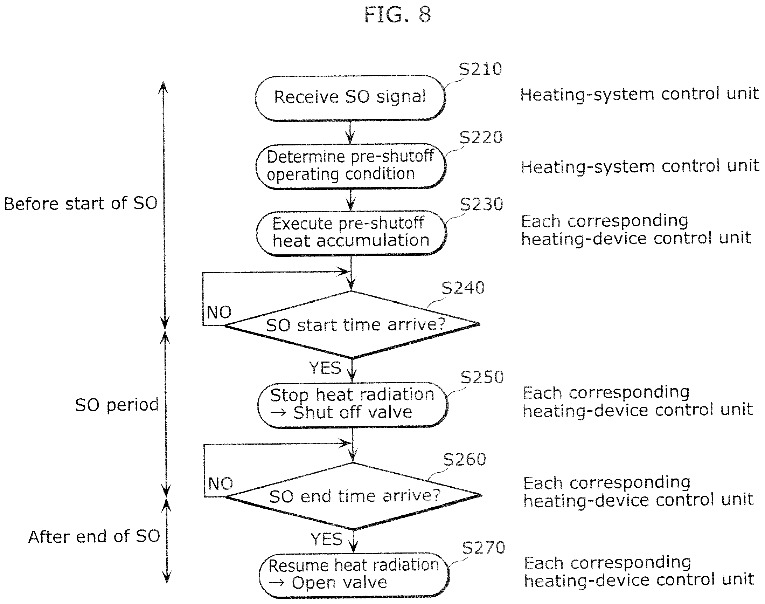

   FIG. 8 is a diagram showing an overview of a heating-system control process in Embodiment 1.
[Fig. 9]

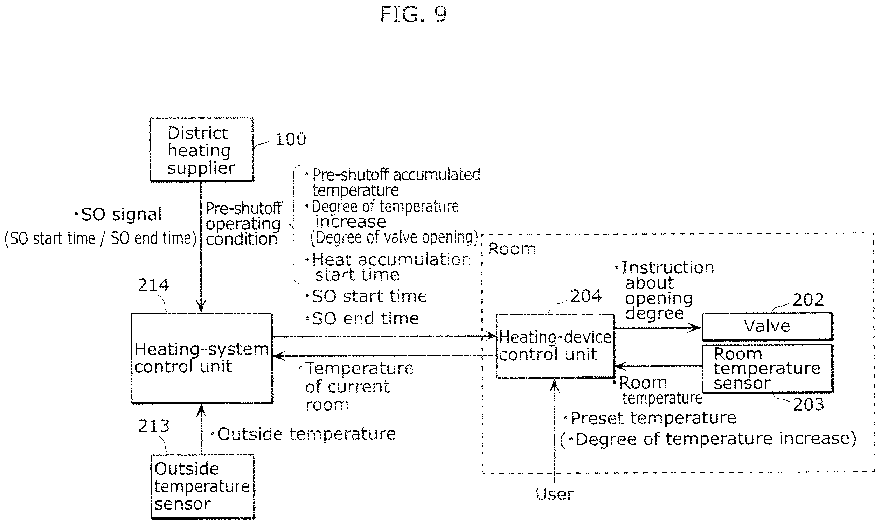

   FIG. 9 is a diagram showing an example of information transmitted and received between structural elements in Embodiment 1.
[Fig. 10A]

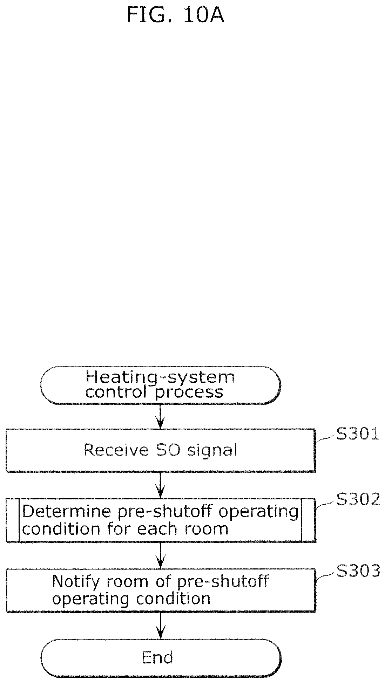

   FIG. 10A is a flowchart showing a heating-system control process in Embodiment 1.
[Fig. 10B]

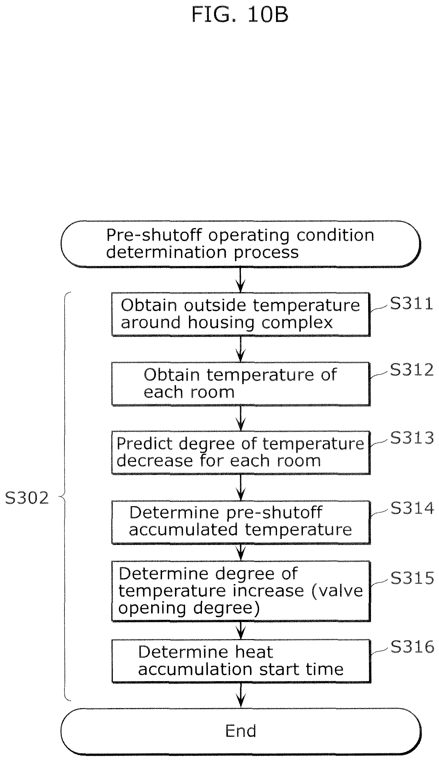

   FIG. 10B is a flowchart showing a process performed to determine a pre-shutoff operating condition in Embodiment 1.
[Fig. 11]

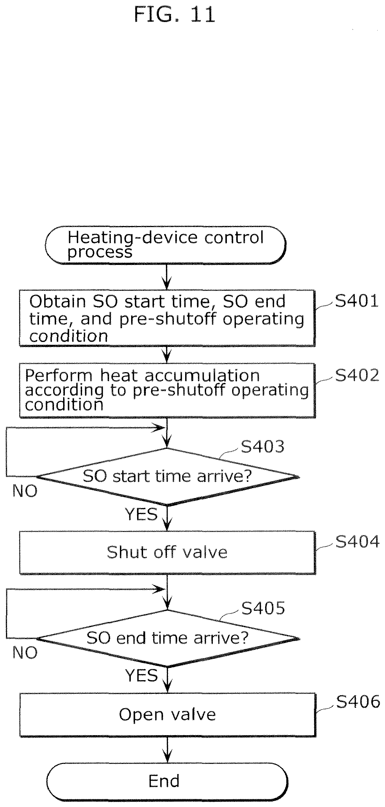

   FIG. 11 is a flowchart showing a heating-device control process in Embodiment 1.
[Fig. 12A]

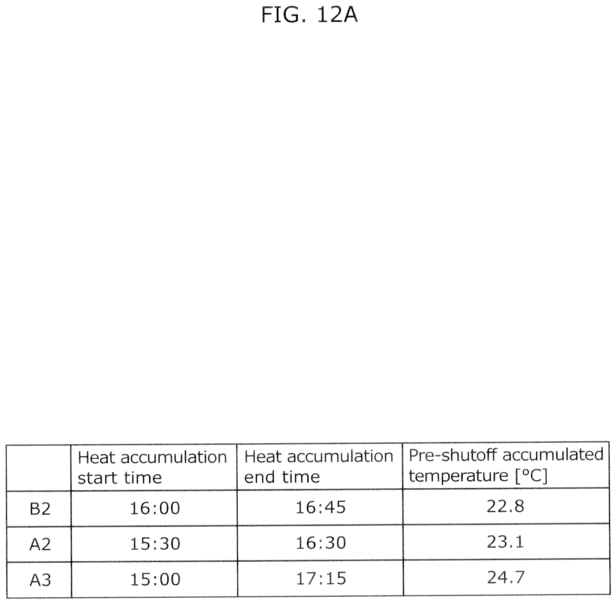

   FIG. 12A is a table showing an example of the pre-shutoff operating condition for each room.
[Fig. 12B]

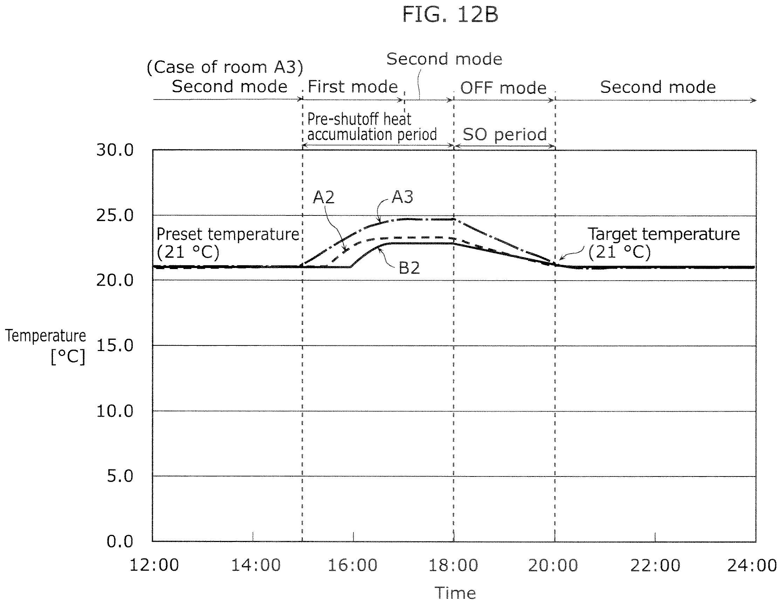

   FIG. 12B is a diagram showing changes in the room temperature of rooms A2, A3, and B2 in the case where the heating devices are controlled under the pre-shutoff operating conditions shown in FIG. 12A.
[Fig. 13A]

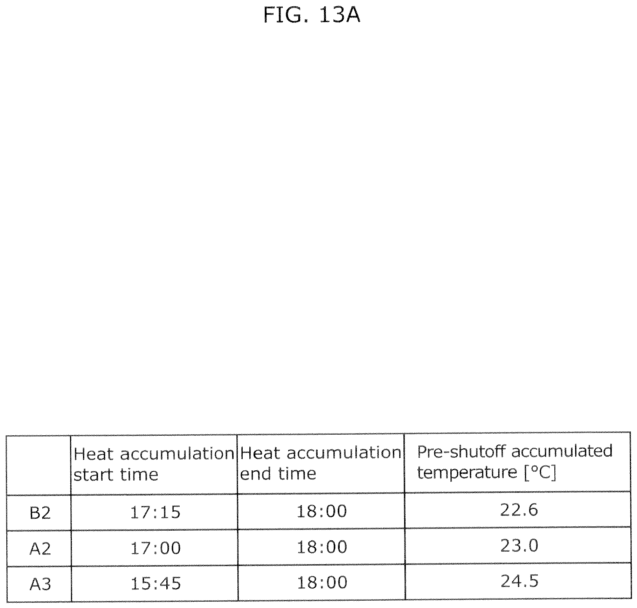

   FIG. 13A is a table showing another example of the pre-shutoff operating condition for each room.
[Fig. 13B]

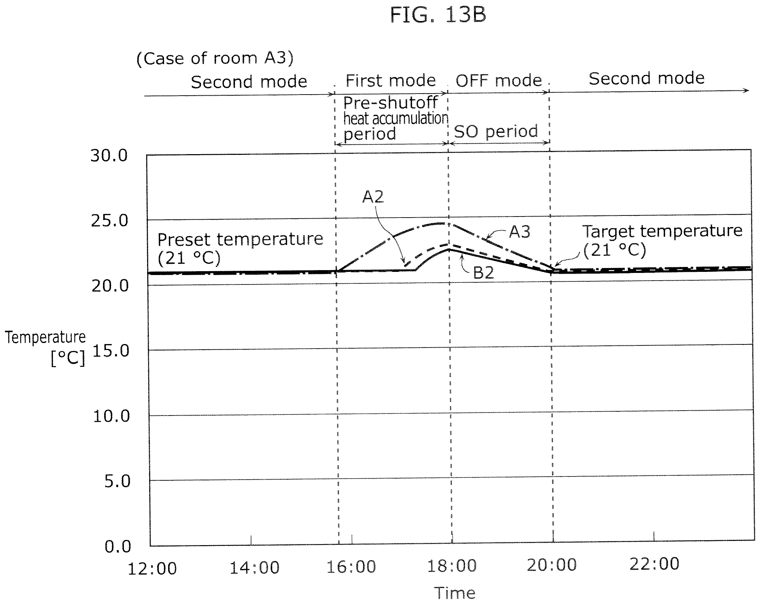

   FIG. 13B is a diagram showing changes in the room temperature of the rooms A2, A3, and B2 in the case where the heating devices are controlled under the pre-shutoff operating conditions shown in FIG. 13A.
[Fig. 14A]

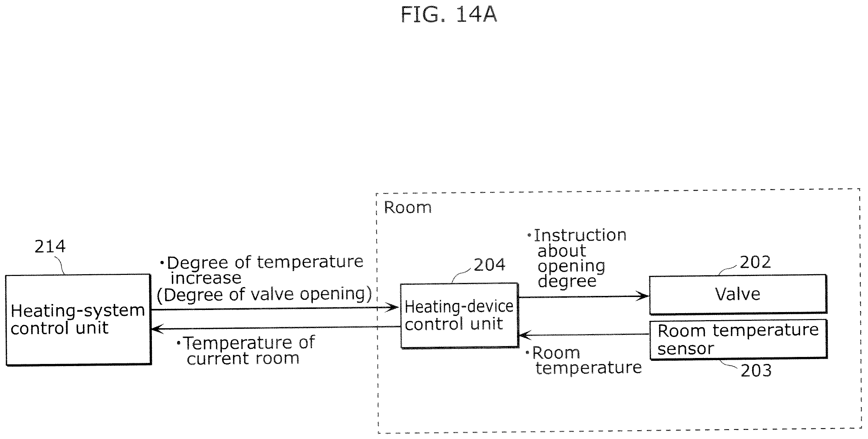

   FIG. 14A is a diagram showing an example of information transmitted and received between structural elements in Embodiment 2.
[Fig. 14B]

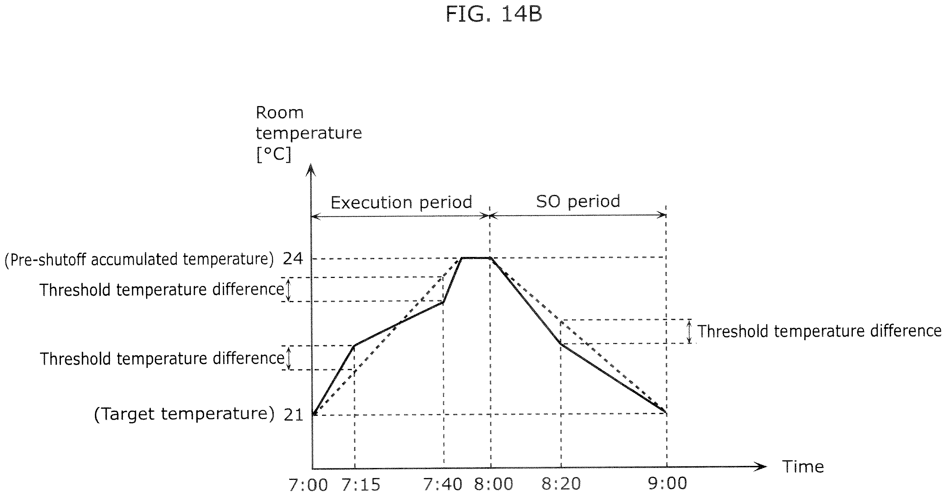

   FIG. 14B is a diagram showing changes in the room temperature in the case where a heating-system control process in Embodiment 2 is performed.
[Fig. 15A]

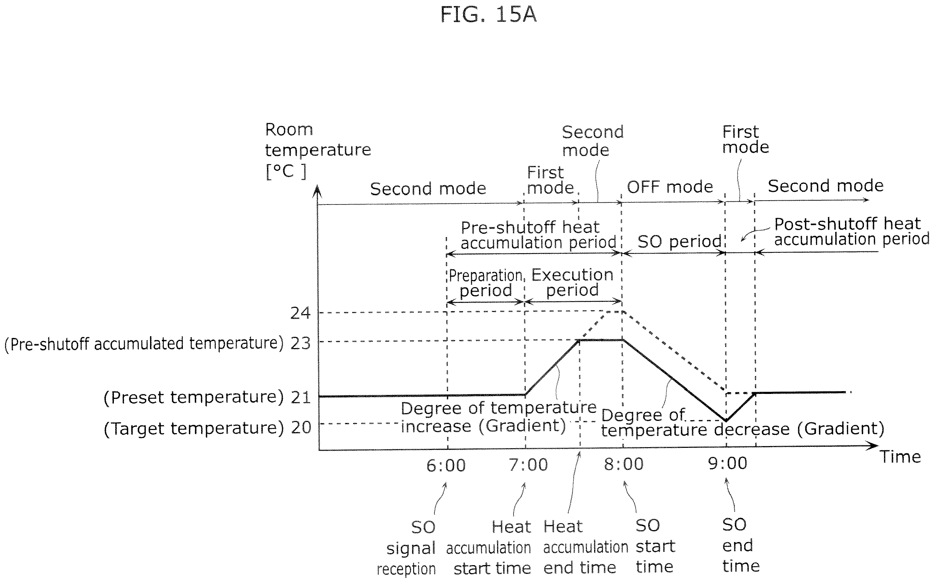

   FIG. 15A is a diagram showing changes in the room temperature in the case where a heating-system control process in Embodiment 3 is performed.
[Fig. 15B]

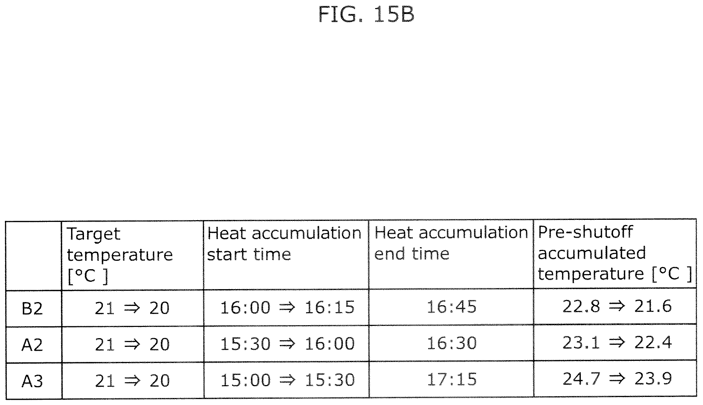

   FIG. 15B is a table showing an example of pre-shutoff operating conditions in Embodiment 3.

### [Description of Embodiments]

The following is a description of a heating system and a heating-system control method in an aspect according to the present invention, with reference to the drawings. The present invention is determined only by the scope of the appended Claims. Thus, among the structural elements described in Embodiments below, the structural elements that are not recited in the Claims are not necessarily required to achieve the object in the present invention. To be more specific, Embodiments described below merely explain more preferred embodiments. It should also be noted that each of the drawings is schematic and thus does not necessarily show an exact illustration.

Firstly, an environment (an infrastructure) to which a heating system in an aspect according to the present invention is applied is explained with reference to FIG. 1. FIG. 1 is a schematic diagram explaining the working of district heating supply, and illustrates that hot water is circulating between a district heating supplier (heat supply source) 100 and a district heating consumer 110.

The district heating supplier 100 is a company that generates heat during operation. The district heating supplier 100 includes, as examples, a factory 101 and an electric power plant 102. To be more specific, each of the factory 101 and the electric power plant 102 shown in FIG. 1 releases hot water generated using waste heat produced during operation (for example, pressurized hot water at 110°C) to a flow channel.

In the above example, hot water is generated using waste heat. However, note that the example is not limited to this. A facility intended for generating hot water to be supplied to the district heating consumer 110 can also be included in the district heating supplier 100. Moreover, it should be obvious that the example is not limited to man-made heat and that hot water may be generated using, for example, geothermal heat. More specifically, the district heating supplier 100 is not limited to the example shown in FIG. 1 and thus includes every facility capable of stably generate and supply hot water.

The district heating consumer 110 is a facility that employs hot water generated by the district heating supplier 100. The district heating consumer 110 includes, as examples, a detached house 111 and a housing complex 112. To be more specific, heat of hot water generated by the district heating supplier 100 is consumed by, for example, heating devices and water heaters provided in the detached house 111 and in rooms included in the housing complex 112. Then, the water flows back to the district heating supplier 100. It should be noted that the district heating consumer 110 is not limited to the example shown in FIG. 1 and includes every facility that consumes heat, such as an office, a store, a school, and a hospital.

Next, a problem of the above-described district heating supply is explained with reference to FIG. 2A, FIG. 2B, FIG. 3, and FIG. 4. Each of FIG. 2A and FIG. 2B is a diagram showing changes in the amount of heat consumed by the district heating consumer 110 shown in FIG. 1. FIG. 3 is a diagram showing an example of the housing complex 112. FIG. 4 is a diagram showing changes in the room temperature for each room included in the housing complex 112 shown in FIG. 3.

In a cold climate area, for example, the amount of heat consumed by a heating device (referred to as the "space heating load" hereafter) of a housing complex is almost constant throughout the day, as shown in FIG. 2A. On the other hand, the amount of heat consumed by a water heater (referred to as the "water heating load" hereafter) is concentrated during regular time periods of the day (8:00 to 9:00 and 21:00 to 22:00, in the example shown in FIG. 2A). The water heater hardly consumes heat during the other time periods. On account of this, in the example shown in FIG. 2A, the heat consumption reaches peaks during the time periods where the water heating load is concentrated (such a time period is referred to as the "peak time period" hereafter).

For the case where a peak occurs in the heat consumption as in FIG. 2A, the district heating supplier 100 needs to have a heat-generating ability corresponding to this peak. Moreover, in order to supply a sufficient amount of hot water during the peak time period, the district heating supplier 100 may possibly have to generate heat using a relatively expensive fuel (such as fossil fuel).

In order to solve the above problem, causing all the heating devices to stop operations during the peak time periods is one idea. With this, the space heating loads during the peak time periods are reduced to zero as shown in FIG. 2B, thereby leveling out the peaks of the heat consumption.

However, even when the operations of all the heating devices are stopped during the peak time periods, another problem arises as follows. For example, suppose that the housing complex 112 which is three stories high includes four rooms for each floor, i.e., 12 rooms in total, as shown in FIG. 3. Generally, heat insulation performance (heat radiation performance) is different for each room, depending on the location of the room. To be more specific: a room A3 has four sides exposed to the outside, out of six sides; a room A2 has three sides exposed to the outside, out of six sides; and a room B2 has two sides exposed to the outside, out of six sides. In this case, the room B2 has the highest heat insulation performance followed by the room A2, and the room A3 has the lowest heat insulation performance.

On account of this, even when the operations of the heating devices provided in the rooms A2, A3, and B2 are stopped at the same time, changes in the room temperature vary from room to room. For example, FIG. 4 shows simulation results of the changes in the room temperature of the rooms A2, A3, and B2 when the operations of the heating devices are stopped from 8:00 to 9:00 (indicated as "OFF period" in FIG. 4). Here, it should be noted that each of the rooms included in the housing complex 112 is 10 meters wide, 7 meters long, and 2.5 meters high. Moreover, note that the changes in the outside temperature which are assumptions in the simulation are also shown in FIG. 4.

As is clear from FIG. 4, the room temperatures of the rooms A2, A3, and B2 decrease monotonically during the OFF period. Here, the rate of decrease in the temperature of the room A3 which has the lowest heat insulation performance is the highest, and the rate of decrease in the temperature of the room B2 which has the lowest heat insulation performance is the lowest. More specifically, at 9:00 which the end time of the OFF period, the temperature of the room A3 is the lowest and the temperature of the room B3 is the highest. In this way, as a result of equally stopping the operations of the heating devices in all the rooms at the same time, a first problem arises that the comfort level varies greatly from room to room.

Moreover, at 9:00 which is the end time of the OFF period, the heating devices of all the rooms resume the operations at once in order to increase the room temperatures of the rooms back to initial preset temperatures. This results in a second problem that new peaks occur during time periods (9:00 to 10:00 and 22:00 to 23:00) immediately after the original peak time periods (8:00 to 9:00 and 21:00 to 22:00).

Here, examples of a heating system and a heating-system control method to solve the above first and second problems are described with reference to FIG. 5, FIG. 6A, and FIG. 6B. FIG. 5 is a schematic block diagram showing the heating system in an aspect according to the present invention. FIG. 6A is a flowchart showing a process of controlling the heating system in an aspect according to the present invention. FIG. 6B is a diagram showing an example of changes in the room temperature in the case where the process shown in FIG. 6A is performed.

As shown in FIG. 5, a heating system 10 in an aspect according to the present invention includes a control unit 20 and a plurality of heating devices 31, 32, 33, 34, 35, and 36. Each of the heating devices 31 to 36 is provided in a different room and heats the corresponding room by radiating heat supplied from the district heating supplier 100.

The control unit 20 exchanges information with the district heating supplier 100 and also controls operations of the heating devices 31 to 36 individually. To be more specific, the control unit 20 includes an obtainment unit 21, a prediction unit 22, an operation planning unit 23, and a heating-device control unit 24.

The obtainment unit 21 obtains a heat radiation reduction instruction (referred to as the "shut off (SO) signal" hereafter) from the district heating supplier 100 (S101). Moreover, the obtainment unit 21 obtains the temperatures of the rooms from the respective heating devices 31 to 36. The obtainment unit 21 also obtains, from an outside temperature detection unit (an illustration thereof is omitted in FIG. 5), the outside temperature of the place where the heating system is placed.

It should be noted that the SO signal refers to a signal that requests a reduction in heat radiation of the heating devices 31 to 36. The SO signal includes information specifying a time period during which heat radiation is to be reduced (referred to as the "SO period" hereafter). More specifically, the SO signal includes information specifying a start time of the SO period (referred to as the "SO start time" hereafter which is 8:00 in the example shown in FIG. 6B) and an end time of the SO period (referred to as the "SO end time" hereafter which is 9:00 in the example shown in FIG. 6B).

In the present specification, a time period from when the SO signal is received (6:00 in the example shown in FIG. 6B) to the SO start time is defined as the "pre-shutoff heat accumulation period", as shown in FIG. 6B. Moreover, the pre-shutoff heat accumulation period includes: a preparation period (6:00 to 7:00 in the example shown in FIG. 6B) during which an operation plan for the heating system is formed to execute pre-shutoff heat accumulation; and an execution period (7:00 to 8:00 in the example shown in FIG. 6B) during which pre-shutoff heat accumulation is executed in accordance with the formed operation plan.

The prediction unit 22 predicts changes in the room temperature in the SO period for each of the rooms, during the preparation period shown in FIG. 6B. For example, the prediction unit 22 can predict the changes in the room temperature on the basis of: the outside temperature and room temperature of each room obtained by the obtainment unit 21; and the previously-held heat insulation performance of the room. In principle, heat radiation of the heating devices 31 to 36 are stopped during the SO period. For this reason, the prediction unit 22 thus predicts the rate of decrease in temperature in the SO period for each of the rooms. To be more specific, the prediction unit 22 predicts a gradient of a straight line showing the changes in the room temperature of the room (-1°C / 20 minutes, in the example shown in FIG. 6B).

The operation planning unit 23 determines a pre-shutoff accumulated temperature for each of the rooms on the basis of the changes in the room temperature predicted by the prediction unit 22, during the preparation period shown in FIG. 6B. The pre-shutoff accumulated temperature refers to the temperature of the room at the SO start time (24°C in the example shown in FIG. 6B) that allows the temperature of the room to reach a predetermined target temperature (21°C in the example shown in FIG. 6B) at the SO end time.

Then, the operation planning unit 23 determines an operating condition for each room to increase the room temperature of the room to the pre-shutoff accumulated temperature (this operating condition is referred to as the "pre-shutoff operating condition" hereafter) (S102). The pre-shutoff operating condition may include, for example, a pre-shutoff accumulated temperature, a heat accumulation start time, and a degree of temperature increase (a rate of temperature increase). Here, the degree of temperature increase (the rate of temperature increase) refers to a degree of increase in the temperature of the room per unit of time.

The heating-device control unit 24 controls the operations (the amounts of heat radiation) of the heating devices 31 to 36. To be more specific, the heating-device control unit 24 controls each of the operations of the heating devices 31 to 36 in accordance with the pre-shutoff operating condition determined for each of the rooms by the operation planning unit 23. The heating-device control unit 24 performs this control in order to allow the temperature of the room to reach the pre-shutoff accumulated temperature within the pre-shutoff heat accumulation period (the execution period in FIG. 6B) from the SO signal reception to the SO start time (S103). Then, the heating-device control unit 24 causes all the heating devices 31 to 36 to stop heat radiation at the SO start time and to resume heat radiation at the SO end time (S104).

The following describes a heating system and a heating-system control method for each of Embodiments 1 to 3 according to the present invention, with reference to the drawings.

### [Embodiment 1]

Firstly, a configuration of a heating system in Embodiment 1 is described with reference to FIG. 7A and FIG. 7B. FIG. 7A is a diagram showing an example of a facility that is included in a housing complex 112 and necessary to heat each room with hot water supplied from a district heating supplier 100. FIG. 7B is an enlarged view of one of the rooms shown in FIG. 7A.

As shown in FIG. 7A and FIG. 7B, the housing complex 112 includes a heat exchanger 210, a calorimeter 211, a pump 212, an outside temperature sensor 213, and a heating-system control unit 214. Moreover, each of the rooms in the housing complex 112 includes a radiator 201, a valve 202, a room temperature sensor 203, and a heating-device control unit 204. It should be noted that, in FIG. 7A and FIG. 7B, a solid arrow indicates the flow of hot water and a dashed arrow indicates the flow of information (signal).

The heat exchanger 210 causes heat exchange to be performed between: hot water circulating between the district heating supplier 100 and the heat exchanger 210; and hot water circulating between the heat exchanger 210 and each of the rooms. The heat exchanger 210 is typically provided in the basement of the housing complex 112. To be more specific, the heat exchanger 210 performs heat exchange between high-temperature hot water flowing from the district heating supplier 100 and low-temperature hot water flowing from each of the rooms. Thus, hot water having a decreased temperature flows back to the district heating supplier 100 from the heat exchanger 210, and hot water having an increased temperature flows back to each of the rooms from the heat exchanger 210.

The calorimeter 211 measures the amount of heat exchanged by the heat exchanger 210. To be more specific, the calorimeter 211 measures a temperature of the high-temperature hot water flowing from the district heating supplier 100 to the heat exchanger 210 (a first temperature) and a temperature of the low-temperature hot water flowing back to the district heating supplier 100 from the heat exchanger 210 (a second temperature). Then, by multiplying a difference between the first and second temperatures by the flow rate of hot water flowing into the heat exchanger 210, the calorimeter 211 measures the amount of heat exchanged by the heat exchanger 210. It should be noted that the amount of heat measured by the calorimeter 211 is used for, for example, calculating a usage fee of district heat to be charged to the housing complex 112.

The pump 212 controls the flow rate of high-temperature hot water flowing from the heat exchanger 210 to each of the rooms, and is typically provided in the basement of the housing complex 112. For example, the pump 212 can change the flow rate of hot water flowing from the heat exchanger 210 to each of the rooms within a range between 20 (I/min) and 60 (I/min) according to control by the heating-system control unit 214.

The outside temperature sensor 213 detects an outside temperature around the housing complex 112, and then notifies the heating-system control unit 214 of the detected outside temperature.

The heating-system control unit 214 controls the whole heating system by exchanging information with the district heating supplier 100 and each of the heating-device control units 204 of the rooms. The heating-system control unit 214 shown in FIG. 7A corresponds to the obtainment unit 21, the prediction unit 22, and the operation planning unit 23 in FIG. 5, for example.

The radiator 201 heats the corresponding room by radiating heat of hot water supplied from the heat exchanger 210. It should be noted that the radiator 201 may radiate heat of hot water into the air or may heat the floor of the room with heat of hot water to implement floor heating. One radiator 201 may be provided for each of the rooms. Or, a plurality of radiators 201 (two radiators in the examples shown in FIG. 7A and FIG. 7B) may be provided for each of the rooms.

The valve 202 controls the flow rate (i.e., the amount of heat) of hot water flowing from the heat exchanger 210 to the radiator 201. The valve 202 has a function of communicating with the heating-device control unit 204 and can change the flow rate according to an instruction received from the heating-device control unit 204. For example, as disclosed in Patent Literature 1, the valve including the radio receiver (Thermostatic Radiator Valve: TRV) may be used. One valve 202 may control the flow rate of hot water flowing into one radiator 201. Or, one valve 202 may control the flow rates of hot water flowing into a plurality of radiators 201.

The room temperature sensor 203 detects the room temperature of the corresponding room and notifies the heating-device control unit 204 of the detected room temperature.

The heating-device control unit 204 controls the radiator 201 and the valve 202 (collectively referred to as the "heating device" hereafter) provided in the corresponding room, by exchanging information with the heating-system control unit 214. Moreover, the heating-device control unit 204 receives a preset room temperature entered by a user. Then, the heating-device control unit 204 controls the operation of the heating device so as to allow the room temperature of the room to be closer to the user preset temperature in time periods other than the SO period and the pre-shutoff heat accumulation period (or more specifically, the execution period in FIG. 6B). For example, the heating-device control unit 204 shown in FIG. 7A corresponds to the heating-device control unit 24 shown in FIG. 5.

The heating-device control unit 204 can select an OFF mode, a first mode, or a second mode as an operation mode of the heating device. In the OFF mode, heat radiation is completely stopped (or, only minimum heat required to maintain the function of the heating system is radiated). In the first mode, heat required to increase the temperature of the room to the preset temperature is radiated. In the second mode, heat required to maintain the current temperature of the room is radiated.

The heating-device control unit 204 can switch interchangeably between the above-described modes, by controlling the flow rate of hot water supplied to the radiator 201 via the valve 202. More specifically, the amount of hot water (the amount of heat) supplied to the radiator 201 when the first mode is selected is larger than the amount of hot water (the amount of heat) supplied to the radiator 201 when the second mode is selected.

Next, the following describes an overview of the heating-system control process in Embodiment 1. In Embodiment 1, when the SO signal is received from the district heating supplier 100 (S210), the pre-shutoff operating condition is determined for each of the rooms (S220). Then, pre-shutoff heat accumulation is performed in accordance with the pre-shutoff operating condition to increase the temperature of the room to the pre-shutoff accumulated temperature before the SO start time (S230). When the SO start time arrives (YES in S240), all the valves 202 are shut off to stop heat radiation of the radiators 201 (S250). Then, when the SO end time arrives (YES in S260), all the valves 202 are opened to resume heat radiation of the radiators 201 (S270).

In Embodiment 1, Steps S210 and S220 of the above process are performed by the heating-system control unit 214, and Steps S230, S240, S250, S260, and S270 of the above process are performed by the heating-device control unit 204. However, this division of roles is merely an example and not intended to be limiting.

Next, the following describes details of the heating-system control process in Embodiment 1 with reference to FIG. 9, FIG. 10A, FIG. 10B, FIG. 11, FIG. 12A, and FIG. 12B. FIG. 9 is a diagram showing an example of information transmitted and received between the structural elements. FIG. 10A is a flowchart showing the heating-system control process performed by the heating-system control unit 214. FIG. 10B is a flowchart showing a process performed by the heating-system control unit 214 to determine the pre-shutoff operating condition. FIG. 11 is a flowchart showing a heating-device control process performed by the heating-device control unit 204 of the current room. FIG. 12A is a table showing an example of the pre-shutoff operating conditions determined by the pre-shutoff operating condition determination process shown in FIG. 10B. FIG. 12B is a diagram showing changes in the room temperature of the rooms A2, A3, and B2 of the housing complex 112 shown in FIG. 3 in the case where the heating-system control process in Embodiment 1 is performed.

As shown in FIG. 9, the heating-system control unit 214 obtains: the SO signal from the district heating supplier 100; each of the room temperatures of the rooms from the heating-device control unit 204; and the outside temperature from the outside temperature sensor 213. Moreover, the heating-system control unit 214 notifies the heating-device control unit 204 of the pre-shutoff operating condition (including the pre-shutoff accumulated temperature, the degree of temperature increase, and the heat accumulation start time in the example shown in FIG. 9), the SO start time, and the SO end time.

The heating-device control unit 204 gives an instruction to the valve 202 regarding a valve opening degree, and obtains the room temperature of the corresponding room from the room temperature sensor 203. Moreover, the heating-device control unit 204 receives the preset room temperature entered by the user. Then, the heating-device control unit 204 controls the opening degree of the valve 202 to allow the room temperature of the current room to be closer to the preset temperature in a time period for which no instruction is received from the heating-system control unit 214. Here, the heating-device control unit 204 may receive a degree of temperature increase entered by the user.

For example, suppose that each of the preset temperatures of the rooms A2, A3, and B2 is 21°C. In this case, before the start of the pre-shutoff heat accumulation period shown in FIG. 12B, the room temperature is maintained at 21°C by causing the heating device of each room to operate in the second mode. Here, as described above, the second mode refers to the operation mode in which heat required to maintain the current temperature of the room is radiated. In the example shown in FIG. 12B, the preset temperatures of the rooms A2, A3, and B2 are the same. However, it should be obvious that the preset temperature may be different for each of the rooms.

Next, as shown in FIG. 10A, the heating-system control unit 214 receives the SO signal from the district heating supplier 100 (S301). The SO signal includes information specifying the SO start time and the SO end time. In the example shown in FIG. 12B, the SO start time is 18:00 and the SO end time is 20:00.

Here, examples of the "information specifying the SO start time and the SO end time" are not particularly limited. For example, the information may simply indicate the SO start time and the SO end time, like "SO start time: 18:00, SO end time: 20:00". Or, the information may indicate the SO start time and the length of the SO period, like "SO start time: 18:00, SO period: 2 hours".

Then, the heating-system control unit 214 determines the pre-shutoff operating condition for each of the rooms (S302). The pre-shutoff operating condition may include, for example, the pre-shutoff accumulated temperature, the degree of temperature increase, the heat accumulation start time, and the heat accumulation end time. The process performed in Step S302 to determine the pre-shutoff operating condition is described in detail, with reference to FIG. 10B.

Firstly, the heating-system control unit 214 obtains the outside temperature from the outside temperature sensor 213 (S311). Then, the heating-system control unit 214 obtains each of the room temperatures measured by the room temperature sensors 203 of the rooms via the heating-device control units 204 (S312). The order in which Steps S311 and S312 are performed is not limited to the above. These steps may be performed in the reverse order, or may be performed in parallel.

Next, the heating-system control unit 214 predicts a degree of temperature decrease (a rate of temperature decrease) for each of the rooms (S313). Note that the degree of temperature decrease can be predicted on the basis of the outside temperature obtained in Step S311, the temperature of the room obtained in Step S312, and the previously-held heat insulation performance of the room.

The degree of temperature decrease is likely to be: larger when the outside temperature is lower; larger when the temperature of the room is lower; and larger when the heat insulation performance is low. To be more specific, the heat insulation performance of the rooms A2, A2, and B2 of the housing complex 112 shown in FIG. 3 is indicated as A3<A2<B2 as described above. Therefore, the degrees of temperature decrease are indicated as B2<A2<A3.

Then, the heating-system control unit 214 determines the pre-shutoff accumulated temperature for each of the rooms (S314). Here, the pre-shutoff accumulated temperature refers to the room temperature of the room at the SO start time after the heat of the room has been accumulated from the preset temperature. The pre-shutoff accumulated temperature is determined so as to allow the temperature of the room to reach the target temperature (the temperature of the room at the SO end time) when the temperature of the room decreases in the SO period according to the degree of temperature decrease predicted in Step S313. Here, the pre-shutoff accumulated temperature is determined for each of the rooms. To be more specific, when the target temperature (the temperature of the room at the SO end time) is 21°C and the predicted degree of temperature decrease is 3°C, the pre-shutoff accumulated temperature is determined as 24°C.

The heating-system control unit 214 can determine the pre-shutoff accumulated temperature on the basis of, for example, the target temperature, the degree of temperature decrease, and the length of the SO period. More specifically, the pre-shutoff accumulated temperature is the temperature at the SO start time. As shown in FIG. 6B, in a plane where a first axis (horizontal axis) represents time and a second axis (vertical axis) represents temperature, suppose a straight line showing changes in the room temperature. When this line passes through the target temperature at the SO end time and has the degree of temperature decrease as a gradient, the temperature at the SO start time is the pre-shutoff accumulated temperature.

The pre-shutoff accumulated temperature is likely to be: higher when the target temperature (the temperature of the room at the SO end time) is higher; higher when the degree of temperature decrease is higher; and higher when the length of the SO period is longer. To be more specific, the pre-shutoff accumulated temperatures of the rooms A2, A2, and B2 are indicated as B2 (22.8°C) < A2 (23.1°C) < A3 (24.7°C) as shown by the example in FIG. 12A. It should be noted that, in Embodiment 1, the target temperature is set as the same temperature as the preset temperature entered by the user (the preset temperature = the target temperature).

The above example assumes that the change in the room temperature in the SO period is linear. Here, when the change in the room temperature is nonlinear, the pre-shutoff accumulated temperature may be determined according to the above method by approximating a temperature change curve to a temperature change straight line. Or, the pre-shutoff accumulated temperature may be determined from a temperature change curve passing through the target temperature at the SO end time.

Next, the heating-system control unit 214 determines the degree of temperature increase for each of the rooms (S315). When the pre-shutoff heat accumulation period is sufficiently long, the degree of temperature increase entered into the heating-device control unit 204 by the user or a preset degree of temperature increase of the heating-system control unit 214 may be used. The degree of temperature increase in this case is set at a value (1°C / 10 minutes, for example) that does not cause excessive discomfort to the user. On the other hand, when the pre-shutoff heat accumulation period is short, the heating-system control unit 214 needs to determine, for each of the rooms, the degree of temperature increase required for the room temperature of the room to reach the pre-shutoff accumulated temperature at the SO start time.

After this, the heating-system control unit 214 determines the heat accumulation start time for each of the rooms (S316). The heat accumulation start time is determined for each of the rooms so as to allow the room temperature of the room to reach the pre-shutoff accumulated temperature before the SO start time when the room temperature of the room increases according to the degree of temperature increase determined in Step S315. In the example shown in FIG. 12A: the heat accumulation start time is 16:00 and the heat accumulation end time is 16:45, for the room B2; the heat accumulation start time is 15:30 and the heat accumulation end time is 16:30, for the room A2; and the heat accumulation start time is 15:00 and the heat accumulation end time is 17:15, for the room A3. In this way, for all of the rooms, pre-shutoff heat accumulation is finished before 18:00 which is the SO start time.

Here, the heating-system control unit 214 may notify each of the heating-device control units 204 of the heat accumulation end time shown in FIG. 12A by including this heat accumulation end time in the pre-shutoff operating condition. Or, this notification may be omitted. When the notification of the heat accumulation end time is omitted, each of the heating-device control units 204 may start heat radiation satisfying the degree of temperature increase at the heat accumulation start time and end the heat radiation when the temperature of the room reaches the pre-shutoff accumulated temperature (however, heat radiation to maintain the temperature of the room continues). In the case where the degree of temperature increase entered into the heating-device control unit 204 of the room is used as it is, the degree of temperature increase included in the pre-shutoff operating condition shown in FIG. 9 does not need to be included in the pre-shutoff operating condition.

Then, the heating-system control unit 214 notifies each of the heating-device control units 204 of the rooms about: the pre-shutoff operating condition determined for each of the rooms in Step S302 shown in FIG. 10A; the SO start time; and the SO end time (S303).

Next, as shown in FIG. 11, the heating-device control unit 204 of each room obtains the pre-shutoff operating condition, the SO start time, and the SO end time from the heating-system control unit 214 (S401).

Then, the heating-device control unit 204 of each room performs pre-shutoff heat accumulation in accordance with the pre-shutoff operating condition obtained in Step S401 (S402). Here, the "pre-shutoff heat accumulation" means to accumulate, in advance in the room, the amount of heat corresponding to the amount of heat to be lost during the SO period, that is, means to increase the temperature of the room by the temperature decrease to be caused during the SO period. To be more specific, the heating-device control unit 204 of each room switches the operation mode of the heating device from the second mode to the first mode at the heat accumulation start time. Then, the heating-device control unit 204 switches the operation mode from the first mode to the second mode at the heat accumulation end time (or, when the temperature of the room reaches the pre-shutoff accumulated temperature). Here, as described above, the first mode refers to the operation mode in which heat required to increase the temperature of the room to the preset temperature is radiated.

The temperature change of the room A3 is explained with reference to FIG. 12B. Until 15:00, the room temperature of the room A3 is maintained at 21°C that is the preset temperature. Then, when 15:00 which is the heat accumulation start time arrives, the heating-device control unit 204 of the room A3 controls the opening degree of the valve 202 to increase the room temperature of the room A3 according to the obtained degree of temperature increase (i.e., the operation mode is switched from the second mode to the first mode).

Next, when the room temperature of the room A3 reaches the pre-shutoff accumulated temperature (i.e., 17:15 that is the heat accumulation end time), the heating-device control unit 204 of the room A3 terminates heat accumulation (i.e., the operation mode is switched from the first mode to the second mode). As a result, the room temperature of the room A3 is maintained at the pre-shutoff accumulated temperature (24.7°C) before the SO start time arrives. Note that each of the heating-device control units 204 of the rooms A2 and B2 also performs heat accumulation in accordance with the pre-shutoff operating condition in the same manner as described above.

Then, when the SO start time arrives (YES in S403), the heating-device control unit 204 of each room shuts off the valve 202 (S404). To be more specific, the heating-device control unit 204 of each room switches the operation mode of the heating device from the second mode to the OFF mode. As a result, the room temperatures of the rooms A2, A3, and B2 gradually decrease from 18:00 as shown in FIG. 12B.

Next, when the SO end time arrives (YES in S405), the heating-device control unit 204 of each room opens the valve 202 (S406). In Embodiment 1, the room temperature of each room at the SO end time (i.e., the target temperature) is set to agree with 21°C that is the preset temperature of each room. The heating-device control unit 204 of each room switches the operation mode of the heating device from the OFF mode to the second mode at the SO end time. As a result, after the SO end time, the room temperatures of the rooms A2, A3, and B2 are maintained at 21°C that is the preset temperature, as shown in FIG. 12B.

As described above, since heat radiation of all the heating devices are stopped during the SO period, the space heating load during the SO period can be reduced to 0 (zero). For example, by setting the peak time periods shown in FIG. 2A as the SO periods, a peak can be effectively prevented from occurring in the amount of heat consumed by the whole housing complex 112 (the total heat consumption). As a result, the district heating supplier 100 can have the advantage of not having to generate heat using a relatively expensive fuel to provide a necessary amount of heat during the peak time period.

Moreover, by increasing the room temperature of each room to the pre-shutoff accumulated temperature before the SO start time, the temperature of the room can be effectively prevented from falling too low during the SO period. Here, suppose that the pre-shutoff accumulated temperatures of all the rooms are the same. In such a case, the temperature of one room (A3 for example) falls too low at the SO end time and the temperature of another room (B2 for example) rises too high at the SO start time. This means that the comfort level may possibly vary from room to room.

In view of this, the heating-system control unit 214 in Embodiment 1 predicts the degree of temperature decrease according to circumstances (including the preset temperature and the heat insulation performance) for each room, and then determines the pre-shutoff accumulated temperature of the room based on the result of the prediction. Thus, the temperature of each room never falls below the preset temperature of the room at the SO end time, and a difference between the temperature of the room at the SO start time and the preset temperature can be minimized. In other words, the comfort levels of the rooms in the housing complex 112 can be equalized.

The following describes another example of the pre-shutoff operating condition, with reference to FIG. 13A and FIG. 13B.

In the examples of the pre-shutoff operating condition shown in FIG. 12A and FIG. 12B, the heat accumulation end time is set before the SO start time. For this reason, the heating-device control unit 204 of each room needs to cause the heating device to operate in the second mode in order to maintain the temperature of the room at the pre-shutoff accumulated temperature from the heat accumulation end time to the SO start time. Here, the amount of heat radiation from the heating device operating in the second mode is larger when the temperature of the room to be maintained is higher. To be more specific, the amount of heat radiation required to maintain the temperature of the room at the pre-shutoff accumulated temperature is larger than the amount of heat radiation required to maintain the temperature of the room at the preset temperature (21°C).

In view of this, the heat accumulation end times of all the rooms A2, A3, and B2 included in the pre-shutoff operating conditions shown in FIG. 13A are set to agree with the SO start time. With this, as shown in FIG. 13B, each of the room temperatures of the rooms reaches the pre-shutoff accumulated temperature exactly at the SO start time. Therefore, the heating-device control unit 204 of each room only has to switch the operation mode of the heating device from the first mode directly to the OFF mode at the SO start time. More specifically, unlike the case described above with reference to the examples shown in FIG. 12A and FIG. 12B, the heating-device control unit 204 of each room does not need to perform the two-step control whereby the operation mode is switched from the first mode to the second mode at the heat accumulation end time and then switched from the second mode to the OFF mode at the SO start time.

However, when heat accumulation is executed in all the rooms immediately before the SO start time, a peak in the total power consumption may possibly occur during a time period immediately before the SO start time. In order to solve this, the pre-shutoff operating condition of one room may be set to allow heat accumulation for this room to be finished before the SO start time, and the pre-shutoff operating condition of another room may be set to allow heat accumulation for this room to be finished exactly at the SO start time.

As one example, heat accumulation for the room A3 may be performed using the pre-shutoff operating condition shown in FIG. 12A, and heat accumulation for the room B2 may be performed using the pre-shutoff operating condition shown in FIG. 13A. With this, the time period where the heating device of the room A3 operates in the first mode (i.e., from 15:00 to 17:15) does not coincide with the time period where the heating device of the room B2 operates in the first mode (i.e., from 17:15 to 18:00). Hence, a peak in the total power consumption can be effectively prevented from occurring immediately before the SO start time.

### [Embodiment 2]

The following describes an overview of a heating-system control process in Embodiment 2 with reference to FIG. 14A and FIG. 14B. It should be noted that points identical to those in Embodiment 1 are omitted and that point of difference are mainly described in Embodiment 2.

In Embodiment 1, the opening degree of the valve 202 is not changed during the execution period of the pre-shutoff heat accumulation period and the valve 202 is completed shut off during the SO period. On account of this, when the actual temperature change of the room is different from the predicted temperature change, the comfort level of this room may possibly be compromised. There are various possible reasons why the actual temperature of the room is different from the prediction. For example, the outside temperature may suddenly change, or the room circumstances may be changed such as in the case where a window is opened.

In view of this, as shown in FIG. 14A, the heating-system control process in Embodiment 2 is different from Embodiment 1 in that: the room temperature of each room is obtained from a heating-device control unit 204 per unit of time during the pre-shutoff heat accumulation period and the SO period; and a new degree of temperature increase to allow the obtained temperature to be closer to the predicted value is notified to the heating-device control unit 204.

The control performed on the heating device during the pre-shutoff heat accumulation period and the SO period is described, with reference to FIG. 14B. Although the example shown in FIG. 14B explains only about one room, the same control is performed for each of the rooms in practice.

The temperature changes during the pre-shutoff heat accumulation period and the execution period can be predicted on the basis of, for example, the preset temperature, the heat accumulation start time, the degree of temperature increase, and the pre-shutoff accumulated temperature. To be more specific, the prediction of the room temperature in the execution period is indicated by a dashed line in a plane shown in FIG. 14B where a first axis (horizontal axis) represents time and a second axis (vertical axis) represents temperature. The dashed line predicts that the temperature of the room reaches the preset temperature (21°C) at the heat accumulation start time (7:00), increases monotonically up to the pre-shutoff accumulated temperature (24°C) according to the degree of temperature increase as a gradient, and remains constant (maintained at 24°C) after reaching the pre-shutoff accumulated temperature.

Moreover, a heating-system control unit 214 obtains the temperature of the room measured by a room temperature sensor 203 per unit of time (per second, for example) via the heating-device control unit 204. Then, the heating-system control unit 214 compares the obtained room temperature (the actual measured value) with the predicted value of the room temperature of the corresponding time. When a difference between the actual measured value and the predicted value is larger than or equal to a threshold temperature difference, the heating-system control unit 214 calculates a new degree of temperature increase to allow the actual measured value to be closer to the predicted value and then notifies the heating-device control unit 204 of the calculated degree of temperature increase.

For example, suppose that the temperature of the room measured by the room temperature sensor 203 varies as indicated by a solid line shown in FIG. 14B. More specifically, suppose that the temperature of the room rises at a rate exceeding the degree of temperature increase included in the pre-shutoff operating condition (referred to as the "initial degree of temperature increase" hereafter) from 7:00 to 7:15, and that the actual measured value at 7:15 is higher than the predicted value by a difference larger than or equal to the threshold temperature difference (0.5°C, for example). In this case, the heating-system control unit 214 calculates a new degree of temperature increase smaller than the initial degree of temperature increase, and then notifies the heating-device control unit 204 of the calculated degree of temperature increase. When receiving the new degree of temperature increase from the heating-system control unit 214, the heating-device control unit 204 changes the opening degree of the valve 202 (reduces the flow rate of hot water) to satisfy the obtained new degree of temperature increase.

As a result, the amount of heat radiated from the radiator 201 per unit of time is reduced. Thus, the temperature of the room rises at a rate below the initial degree of temperature increase from 7:15 to 7:40 and the actual measured value at 7:40 is lower than the predicted value by a difference larger than or equal to the threshold temperature difference. In this case, the heating-system control unit 214 calculates a new degree of temperature increase larger than the initial degree of temperature increase, and then notifies the heating-device control unit 204 of the calculated degree of temperature increase. Then, the heating-device control unit 204 changes again the opening degree of the valve 202 (increase the flow rate of hot water) to satisfy the new degree of temperature increase obtained from the heating-system control unit 214.

By repeating the above process, the actual temperature change (the solid line in FIG. 14B) is prevented from being significantly different from the predicted value (the dashed line in FIG. 14B). As a result, the temperature of the room at the SO start time can be effectively prevented from being too much higher or too much lower than the pre-shutoff accumulated temperature. Moreover, since the degree of actual temperature change is allowed to be closer to the initial degree of temperature increase, the user does not experience excessive discomfort during the execution period.

The heating-device control unit 204 and the heating-system control unit 214 in Embodiment 2 perform the same control as described above during the SO period as well. Here, the result of the prediction obtained in Step S313 in FIG. 10B can be used as the predicted value of the temperature change to be caused during the SO period. When the actual measured value is lower than the predicted value by a difference larger than or equal to the threshold temperature difference as in the case at 8:20 shown in the example of FIG. 14B, only the process of opening the valve 202 may be performed to allow the temperature of the room to be closer to the predicted value.

### [Embodiment 3]

The following describes a heating-system control process in Embodiment 3 with reference to FIG. 15A and FIG. 15B. It should be noted that points identical to those in Embodiment 1 are omitted and that points of difference are mainly described in Embodiment 3. Embodiment 3 is different from Embodiment 1 in that the target temperature that is the room temperature of the room at the SO end time is set lower than the preset temperature. Because of this, a post-shutoff heat accumulation period is provided immediately after the SO end time and a process of increasing the room temperature of the room from the target temperature to the preset temperature is added.

FIG. 15A is a diagram comparing changes in the temperature of the room between the cases where the control according to Embodiment 3 is performed (indicated by the solid line) and where the control according to Embodiment 1 is performed (indicated as the dashed line). With reference to FIG. 15A, a difference between Embodiment 1 and Embodiment 3 is described.

As shown in FIG. 15A, a heating-system control unit 214 in Embodiment 3 uses the target temperature (20°C) lower than the preset temperature (21°C) of the heating device in the process of determining a pre-shutoff operating condition (S302 in FIG. 10A). As a result, the pre-shutoff accumulated temperature calculated in Step S314 in FIG. 10B in Embodiment 3 (23°C) is lower than the pre-shutoff accumulated temperature in Embodiment 1 (24°C).

For example, as can be clearly seen by comparing FIG. 12A with FIG. 15B, when the pre-shutoff operating condition is calculated using different target temperatures (21°C in FIG. 12A and 20°C in FIG. 15B), the pre-shutoff accumulated temperature of Embodiment 3 is lower than that of Embodiment 1 and the heat accumulation start time of Embodiment 3 is later than that of Embodiment 1.

In Embodiment 3, the room temperature of the room at the SO end time (the target temperature: 20°C) is lower than the preset temperature (21°C). For this reason, heat radiation is required to be performed to increase the temperature of the room to the preset temperature during a predetermined period of time from the SO end time (this period of time is referred to as the "post-shutoff heat accumulation period" hereafter). To be more specific, when detecting in Step S405 in FIG. 11 that the SO end time arrives (YES in S405), a heating-device control unit 204 switches the operation mode of the heating device from the OFF mode to the first mode instead of the second mode (S406). Then, when the temperature of the room reaches the preset temperature, the heating-device control unit 204 switches the operation of the heating device from the first mode to the second mode to maintain the temperature of the room at the preset temperature.

The degree of temperature increase during the post-shutoff heat accumulation period may be the same value as the degree of temperature increase included in the pre-shutoff operating condition. Alternatively, a value separately determined by the heating-system control unit 214 may be used, or a different value may be used for each of the heating-device control units 204.

As a result of the process shown in FIG. 15A, the total amount of heat radiated to increase the temperature of the room before and after the SO period (i.e., the pre-shutoff heat accumulation period and the post-shutoff heat accumulation period) is substantially equal to the total amount of heat in Embodiment 1. However, the amount of heat radiated during the pre-shutoff heat accumulation period in Embodiment 3 (i.e., before the SO period) is smaller than the amount of heat radiated during the pre-shutoff heat accumulation period in Embodiment 1. On the other hand, the amount of heat radiated during the post-shutoff heat accumulation period in Embodiment 3 (i.e., after the SO period) is larger than the amount of heat radiated in the corresponding time period in Embodiment 1.

In other words, the heating-system control process according to Embodiment 3 allocates a part of the amount of heat to be radiated during the pre-shutoff heat accumulation period in Embodiment 1 for the post-shutoff heat accumulation period. As a result, a peak in the total amount of heat radiation can be more effectively prevented from occurring immediately before the SO start time.

In Embodiment 1, a difference between the temperature of the room at the SO start time (the pre-shutoff accumulated temperature) and the preset temperature is 3°C, and a difference between the temperature of the room at the SO end time (the target temperature) and the preset temperature is 0°C. On the other hand, in Embodiment 3, a difference between the pre-shutoff accumulated temperature and the preset temperature is 2°C, and a difference between the target temperature and the preset temperature is 1°C. More specifically, according to Embodiment 3, the maximum difference with the preset temperature (2°C) can be reduced to be smaller than the case in Embodiment 1 (3°C). Hence, a higher level of comfort can be maintained.

### [Other Embodiments]

Although the present invention has been described by way of Embodiments above, it should be obvious that the present invention is not limited to Embodiments described above. The present invention includes the following embodiments as well.

Each of the above-described devices may be, specifically speaking, a computer system configured with a microprocessor, a ROM, a RAM, a hard disk unit, a display unit, a keyboard, a mouse, and so forth. The RAM or the hard disk unit stores a computer program. The microprocessor operates according to the computer program, so that each function of the devices is carried out. Here, note that the computer program includes a plurality of instruction codes indicating instructions to be given to the computer so as to achieve a specific function.

Some or all of the structural elements included in each of the above-described multi-input noise suppression devices 1000, 1000A, and 1000B may be realized as a single system Large Scale Integration (LSI). The system LSI is a super multifunctional LSI manufactured by integrating a plurality of structural elements onto a signal chip. To be more specific, the system LSI is a computer system configured with a microprocessor, a ROM, a RAM, and so forth. The RAM stores a computer program. The microprocessor operates according to the computer program, so that a function of the system LSI is carried out.

Some or all of the structural elements included in each of the devices may be implemented as an IC card or a standalone module that can be inserted into and removed from the corresponding device. The IC card or the module is a computer system configured with a microprocessor, a ROM, a RAM, and so forth. The IC card or the module may include the aforementioned super multifunctional LSI. The microprocessor operates according to the computer program, so that a function of the IC card or the module is carried out. The IC card or the module may be tamper resistant.

The present invention may be the methods described above. Each of the methods may be a computer program causing a computer to execute the steps included in the method. Moreover, the present invention may be a digital signal of the computer program.

Moreover, the present invention may be a computer program or digital signal recorded on a computer-readable recording medium, such as a flexible disk, a hard disk, a CD-ROM, an MO, a DVD, a DVD-ROM, a DVD-RAM, a Blu-ray Disc (BD), or a semiconductor memory. Also, the present invention may be the digital signal recorded on such a recording medium.

Furthermore, the present invention may be the aforementioned computer program or digital signal transmitted via a telecommunication line, a wireless or wired communication line, a network represented by the Internet, and data broadcasting.

Also, the present invention may be a computer system including a microprocessor and a memory. The memory may store the aforementioned computer program and the microprocessor may operate according to the computer program.

Moreover, by transferring the recording medium having the aforementioned program or digital signal recorded thereon or by transferring the aforementioned program or digital signal via the aforementioned network or the like, the present invention may be implemented by a different independent computer system.

Embodiments described above and modifications may be combined.

Embodiments according to the present invention have been described thus far with reference to the drawings. However, Embodiments shown in the drawings are not intended to limit the scope of the present invention. Various changes and modifications can be made to Embodiments shown in the drawings, unless such changes and modifications depart from the scope of the present invention or from the meanings equivalent to the scope of the present invention.

### [Industrial Applicability]

The present invention is used with advantage as a heating system including a plurality of heating devices.

### [Reference Signs List]

10 Heating system
20 Control unit
21 Obtainment unit
22 Prediction unit
23 Operation planning unit
24 Heating-device control unit
31, 32, 33, 34, 35, 36 Heating devices
100 District heating supplier
101 Factory
102 Electric power plant
110 District heating consumer
111 Detached house
112 Housing complex
201 Radiator
202 Valve
203 Room temperature sensor
204 Heating-device control unit
210 Heat exchanger
211 Calorimeter
212 Pump
213 Outside temperature sensor
214 Heating-system control unit

## Claims

1. A heating-system control method of controlling heating devices (31-36) each of which is provided in a different one of rooms to heat the room by radiating heat generated by a heat supply source (100), the heating-system control method being **characterized in** comprising: the following steps:
obtaining, from the heat supply source (100), a heat radiation reduction instruction to reduce heat radiation of the heating devices (31-36) during a heat radiation reduction period from a heat radiation reduction start time to a heat radiation reduction end time; predicting a change in a room temperature which is to occur during the heat radiation reduction period, for each of the rooms;
determining, based on the change in the room temperature predicted in the predicting, step a pre-shutoff accumulated temperature that allows the room temperature of the room to reach a predetermined target temperature at the heat radiation reduction end time, the pre-shutoff accumulated temperature being the room temperature of the room at the heat radiation reduction start time; and
causing each of the heating devices (31-36) (i) to radiate heat in order for the room temperature of the room to reach the pre-shutoff accumulated temperature determined for the room in the determining, step during a pre-shutoff heat accumulation period from when the heat radiation reduction instruction is obtained to the heat radiation reduction start time and (ii) to stop heat radiation at the heat radiation reduction start time.

2. The heating-system control method according to Claim 1,
wherein, in the obtaining, step a rate of temperature increase during the pre-shutoff heat accumulation period is further obtained,
in the determining, step a heat accumulation start time is further determined for each of the rooms, the heat accumulation start time allowing the room temperature of the room to reach the pre-shutoff accumulated temperature before the heat radiation reduction start time when the room temperature of the room is increased at the rate of temperature increase obtained in the obtaining, step and in the causing, each of the heating devices (31-36) is caused to start heat radiation at the heat accumulation start time determined for the room, and an amount of heat radiation is controlled to allow the room temperature of the room to increase at the rate of temperature increase obtained for the room.

3. The heating-system control method according to Claim 2, wherein, in the causing, step each of the heating devices (31-36) is further caused to radiate heat to allow the room temperature of the room to be maintained at the pre-shutoff accumulated temperature from when the room temperature of the room reaches the pre-shutoff accumulated temperature to the heat radiation reduction start time.

4. The heating-system control method according to Claim 2, wherein, in the determining, step the heat accumulation start time is determined for each of the rooms to allow the room temperature of the room to reach, at the heat radiation reduction start time, the pre-shutoff accumulated temperature determined for the room.

5. The heating-system control method according to any one of Claims 2 to 4,
wherein, in the obtaining, step the room temperature of the room during the pre-shutoff heat accumulation period is further obtained for each of the rooms per unit of time, and
in the causing, step when the room temperature of the room obtained in the obtaining deviates from, during the pre-shutoff heat accumulation period, the change in the room temperature determined from the rate of temperature increase, the amount of heat radiation is corrected to allow the room temperature of the room to closely follow the change in the room temperature.

6. The heating-system control method according to Claim 5, wherein, in the causing, step when the room temperature of the room obtained in the obtaining falls below, during the heat radiation reduction period, the change in the room temperature predicted in the predicting, the heating device (31-36) is further caused to radiate heat to allow the room temperature of the room to closely follow the change in the room temperature.

7. The heating-system control method according to any one of Claims 1 to 6,
wherein each of the target temperatures of the rooms is set lower than a preset temperature of the heating device included in the room, and
in the causing, step each of the heating devices (31-36) is further caused to resume heat radiation at the heat radiation reduction end time to allow the room temperature of the room to increase from the target temperature to the preset temperature.

8. The heating-system control method according to any one of Claims 1 to 7,
wherein, in the obtaining, step an outside temperature and each of the room temperatures of the rooms are further obtained, and
in the predicting, step the change in the room temperature during the heat radiation reduction period is predicted for each of the rooms based on (i) the outside temperature and the room temperature obtained in the obtaining step and (ii) a heat insulation performance of the room.

9. The heating-system control method according to Claim 8, wherein, in the determining, step the pre-shutoff accumulated temperature is determined based on the change in the room temperature predicted in the predicting step and the target temperature.

10. The heating-system control method according to any one of Claims 1 to 9,
wherein each of the heating devices (31-36) includes a valve (202) that increases or decreases an amount of heat to be supplied from the heat supply source (100), and
in the causing, step the amount of heat radiation of the heating device (31-36) is controlled by changing an opening degree of the valve (202).

11. A heating system which controls heating devices (31-36) each of which is provided in a different one of rooms to heat the room by radiating heat generated by a heat supply source (100), the heating system being **characterized in** comprising:
an obtainment unit (21) configured to obtain, from the heat supply source (100), a heat radiation reduction instruction to reduce heat radiation of the heating devices during a heat radiation reduction period from a heat radiation reduction start time to a heat radiation reduction end time;
a prediction unit (22) configured to predict a change in a room temperature to occur during the heat radiation reduction period, for each of the rooms;
an operation planning unit (23) configured to determine, based on the change in the room temperature predicted by the prediction unit (22), a pre-shutoff accumulated temperature that allows the room temperature of the room to reach a predetermined target temperature at the heat radiation reduction end time, the pre-shutoff accumulated temperature being the room temperature of the room at the heat radiation reduction start time; and
a heating-device control unit (24) configured to cause each of the heating devices (31-36) (i) to radiate heat in order for the room temperature of the room to reach the pre-shutoff accumulated temperature determined for the room by the operation planning unit (23), during a pre-shutoff heat accumulation period from when the heat radiation reduction instruction is obtained to the heat radiation reduction start time and (ii) to stop heat radiation at the heat radiation reduction start time.

12. The heating system according to Claim 11, comprising:
a heating-system control unit (214) including the obtainment unit (21), the prediction unit (22), and the operation planning unit (23); and
the heating-device control unit (214) provided for each of the rooms.

## Patentansprüche

1. Heizsystemsteuerverfahren für die Steuerung von Heizeinrichtungen (31-36), wobei jede davon in einem unterschiedlichen Raum bereitgestellt wird, um den Raum durch Abstrahlen von Wärme, die von einer Wärmezufuhrquelle (100) erzeugt wird, zu erwärmen, wobei das Heizsystemsteuerverfahren,
**dadurch gekennzeichnet ist, dass** es die nachstehenden Schritte umfasst:
Erhalt, von der Wärmezufuhrquelle (100), einer Wärmeabstrahlungs-Verringerungsanweisung, um die Wärmeabstrahlung der Heizeinrichtungen (31-36) während einer Wärmeabstrahlungs-Verringerungsperiode von einem Wärmeabstrahlungs-Verringerungsstartzeitpunkt zu einem Wärmeabstrahlungs-Verringerungsendzeitpunkt zu verringern;
Voraussagen der Änderung der Raumtemperatur, zu der es während der Wärmeabstrahlungs-Verringerungsperiode kommt, für jeden der Räume;
Ermittlung, basierend auf der Änderung der Raumtemperatur, die in dem Voraussageschritt vorausgesagt wurde, einer Akkumulierten-Temperatur-vor-Abschaltung, die es gestattet, dass die Raumtemperatur des Raumes eine vorgegebene Zieltemperatur an dem Wärmeabstrahlungs-Verringerungsendzeitpunkt erreicht, wobei die Akkumulierte-Temperatur-vor-Abschaltung (pre-shutoff accumulated temperature) die Raumtemperatur des Raumes an dem Wärmeabstrahlungs-Verringerungsstartzeitpunkt ist, und
Veranlassung jeder der Heizeinrichtungen (31-36) (i) während einer Vor-Abschaltungs-Wärmeakkumulationsperiode, von da an, wenn die Wärmeabstrahlungs-Verringerungsanweisung erhalten wird, bis zu dem Wärmeabstrahlungs-Verringerungsstartzeitpunkt, Wärme abzustrahlen, damit die Raumtemperatur des Raumes die Akkumulierte-Temperatur-vor-Abschaltung erreicht, die in dem Ermittlungsschritt für den Raum ermittelt wurde, und (ii) die Wärmeabstrahlung an dem Wärmeabstrahlungs-Verringerungsstartzeitpunkt zu beenden.

2. Heizsystemsteuerverfahren nach Anspruch 1,
wobei, beim Erhaltungs-Schritt, des Weiteren eine Rate des Temperaturanstiegs während der Vor-Abschaltungs-Wärmeakkumulationsperiode erhalten wird,
in dem Ermittlungsschritt des Weiteren für jeden der Räume ein Wärmeakkumulations-Startzeitpunkt ermittelt wird, wobei der Wärmeakkumulations-Startzeitpunkt es gestattet, dass die Raumtemperatur des Raumes die Akkumulierte-Temperatur-vor-Abschaltung vor dem Wärmeabstrahlungs-Verringerungsstartzeitpunkt erreicht, wenn die Raumtemperatur des Raums mit der Rate des Temperaturanstiegs zunimmt, die in dem Erhaltungsschritt erhalten wurde, und beim Veranlassungsschritt jede der Heizeinrichtungen (31-36) veranlasst wird, die Wärmeabstrahlung an dem Wärmeakkumulations-Startzeitpunkt zu beginnen, der für den Raum festgelegt wurde, und die Menge an Wärmeabstrahlung gesteuert wird, um es der Raumtemperatur des Raumes zu ermöglichen, mit der Rate der Temperaturzunahme zuzunehmen, die für den Raum erhalten wurde.

3. Heizsystemsteuerverfahren nach Anspruch 2, wobei, in dem Veranlassungsschritt jede der Heizeinrichtungen (31-36) des Weiteren dazu veranlasst wird, Wärme abzustrahlen, um der Raumtemperatur des Raumes zu ermöglichen, bei der Akkumulierte-Temperatur-vor-Abschaltung gehalten zu werden, von da an, wenn die Raumtemperatur des Raumes die Akkumulierte-Temperatur-vor-Abschaltung erreicht bis zu der Wärmeabstrahlungs-Verringerungsstartzeit.

4. Heizsystemsteuerverfahren nach Anspruch 2, wobei, in dem Ermittlungsschritt, der Wärmeakkumulations-Startzeitpunkt für jeden der Räume ermittelt wird, um es der Raumtemperatur des Raumes zu ermöglichen, an dem Wärmeabstrahlungs-Verringerungsstartzeitpunkt die Akkumulierte-Temperatur-vor-Abschaltung zu erreichen, die für den Raum ermittelt wurde.

5. Heizsystemsteuerverfahren nach einem der Ansprüche 2 bis 4, wobei, in dem Erhaltungsschritt, die Raumtemperatur des Raums während der Vor-Abschaltungs-Wärmeakkumulationsperiode des Weiteren für jeden der Räume pro Zeiteinheit erhalten wird, und
in dem Veranlassungsschritt, wenn die Raumtemperatur des Raumes, die in dem Erhaltungsschritt erhalten wurde, während der Vor-Abschaltungs-Wärmeakkumulationsperiode von der Änderung der Raumtemperatur, die aus der Rate der Temperaturzunahme ermittelt wurde, abweicht, die Menge der Wärmeabstrahlung berichtigt wird, um es der Raumtemperatur des Raums zu ermöglichen, der Änderung der Raumtemperatur dicht zu folgen.

6. Heizsystemsteuerverfahren nach Anspruch 5, wobei, in dem Veranlassungsschritt, wenn die Raumtemperatur des Raumes, die in dem Erhaltungsschritt erhalten wurde, während der Wärmeabstrahlungs-Verringerungsperiode, die Änderung der Raumtemperatur, die in der Voraussage vorausgesagt wird, unterschreitet, die Heizeinrichtung (31-36) des Weiteren dazu veranlasst wird, Wärme abzustrahlen, um es der Raumtemperatur des Raumes zu gestatten, der Änderung der Raumtemperatur dicht zu folgen.

7. Heizsystemsteuerverfahren nach einem der Ansprüche 1 bis 6, wobei jede der Zieltemperaturen des Raums tiefer eingestellt wird als eine voreingestellte Temperatur der in dem Raum eingeschlossenen Heizeinrichtung, und
in dem Veranlassungsschritt jede der Heizeinrichtungen (31-36) des Weiteren veranlasst wird, die Wärmeabstrahlung an dem Wärmeabstrahlungs-Verringerungsendzeitpunkt wieder aufzunehmen, um der Raumtemperatur des Raumes zu gestatten, von der Zieltemperatur zu der voreingestellten Temperatur zuzunehmen.

8. Heizsystemsteuerverfahren nach einem der Ansprüche 1 bis 7,
wobei, in dem Erhaltungsschritt des Weiteren die Außentemperatur und jede der Raumtemperaturen der Räume erhalten werden, und
in dem Voraussageschritt die Änderung der Raumtemperatur während der Wärmeabstrahlungs-Verringerungsperiode für jeden der Räume basierend auf (i) der Außentemperatur und der Raumtemperatur, die in dem Erhaltungsschritt erhalten wurden, und (ii) dem Wärmeisolationsverhalten des Raumes vorausgesagt wird.

9. Heizsystemsteuerverfahren nach Anspruch 8, wobei, in dem Ermittlungsschritt die Akkumulierte-Temperatur-vor-Abschaltung auf Grundlage der Änderung der Raumtemperatur, die in dem Voraussageschritt vorausgesagt wurde, und der Zieltemperatur ermittelt wird.

10. Heizsteuersystem nach einem der Ansprüche 1 bis 9, wobei jede der Heizeinrichtungen (31-36) ein Ventil (202) einschließt, das die Menge an Wärme, die von der Wärmezufuhrquelle (100) zuzuführen ist, vergrößert oder verkleinert, und in dem Veranlassungsschritt die Menge der Wärmeabstrahlung der Heizeinrichtung (31-36) durch Änderung des Öffnungsgrades des Ventils (202) gesteuert wird.

11. Heizsystem, das die Heizeinrichtungen (31-36) steuert, wobei jede davon in einem unterschiedlichen Raum bereitgestellt wird, um den Raum durch Abstrahlen von Wärme, die von einer Wärmezufuhrquelle (100) erzeugt wird, zu erwärmen, wobei das Heizsystem
**dadurch gekennzeichnet ist, dass** es nachstehende Bestandteile umfasst:
eine Erhaltungseinheit (21) gestaltet, um von der Wärmezufuhrquelle (100) eine Wärmeabstrahlungs-Verringerungsanweisung zu erhalten, um die Wärmeabstrahlung der Heizeinrichtungen während einer Wärmeabstrahlung-Verringerungsperiode von einem Wärmeabstrahlungs-Verringerungsstartzeitpunkt bis zu einem Wärmeabstrahlungs-Verringerungsendzeitpunkt zu verringern;
eine Voraussageeinheit (22), gestaltet, um eine Änderung der Raumtemperatur vorauszusagen, die während der Wärmeabstrahlungs-Verringerungsperiode für jeden der Räume stattfindet;
eine Betriebsablaufplanungseinheit (23), gestaltet, um auf Grundlage der Änderung der Raumtemperatur, die von der Voraussageeinheit (22) vorausgesagt wurde, eine Akkumulierte-Temperatur-vor-Abschaltung zu ermitteln, die es der Raumtemperatur des Raums ermöglicht, eine vorgegebene Zieltemperatur an dem Wärmeabstrahlungs-Verringerungsendzeitpunkt zu erreichen, wobei die Akkumulierte-Temperatur-vor-Abschaltung die Raumtemperatur des Raums an dem Wärmeabstrahlungs-Verringerungsstartzeitpunkt ist; und
eine Heizeinrichtungssteuereinheit (24), gestaltet, um jede der Heizeinrichtungen (31-36) zu veranlassen:
(i) Wärme abzustrahlen, damit die Raumtemperatur des Raumes die Akkumulierte-Temperatur-vor-Abschaltung erreicht, die für den Raum durch die Betriebsablaufplanungseinheit (23) ermittelt wurde, während einer Vor-Abschaltungs-Wärmeakkumulationsperiode, beginnend mit dem Erhalt der Wärmeabstrahlungs-Verringerungsanweisung bis zu dem Wärmeabstrahlungs-Verringerungsstartzeitpunkt und (ii) die Wärmeabstrahlung an dem Wärmeabstrahlungs-Verringerungsstartzeitpunkt zu beenden.

12. Heizsystem nach Anspruch 11, umfassend:
eine Heizsystemsteuereinheit (214), die die Erhaltungseinheit (21), die Voraussageeinheit (22) und die Betriebsablaufplanungseinheit (23) einschließt; und
die Heizeinrichtungssteuereinheit (214), die für jeden der Räume bereitgestellt wird.

## Revendications

1. Procédé de commande de système de chauffage consistant à commander des dispositifs chauffants (31 à 36) dont chacun est prévu dans une pièce différente parmi plusieurs pour chauffer la pièce en émettant par rayonnement de la chaleur générée par une source de fourniture de chaleur (100), le procédé de commande système de chauffage étant **caractérisé en ce qu'**il comprend les étapes suivantes :
la récupération, à partir de la source de fourniture de chaleur (100), d'une instruction de réduction de rayonnement de chaleur afin de réduire le rayonnement de chaleur des dispositifs chauffants (31 à 36) pendant une période de réduction du rayonnement de chaleur, depuis un instant de début jusqu'à un instant de fin de réduction du rayonnement de la chaleur,
la prédiction d'un changement de la température ambiante qui doit se produire pendant la période de réduction de rayonnement de la chaleur, pour chacune des pièces,
la détermination, sur la base du changement de la température ambiante prédit lors de l'étape de prédiction, d'une température accumulée avant coupure qui permet à la température ambiante de la pièce d'atteindre une température cible prédéterminée à l'instant de fin de réduction du rayonnement de la chaleur, la température accumulée avant coupure étant la température ambiante de la pièce à l'instant de début de réduction du rayonnement de la chaleur, et
l'opération consistant à amener chacun des dispositifs chauffants (31 à 36) à rayonner de la chaleur afin que la température ambiante de la pièce atteigne la température accumulée avant coupure déterminée pour la pièce lors de l'étape de détermination, pendant une période d'accumulation de chaleur avant coupure à partir du moment où est obtenue l'instruction de réduction de rayonnement de la chaîne jusqu'au moment de début de réduction de rayonnement de la chaleur et (ii) à stopper le rayonnement de chaleur à l'instant de début de réduction du rayonnement de la chaleur.

2. Procédé de commande de système de chauffage selon la revendication 1,
dans lequel, lors de l'étape de récupération, la vitesse d'augmentation de température pendant la période d'accumulation de chaleur avant coupure est en outre obtenue,
lors de l'étape de détermination, l'instant de début d'accumulation de chaleur est en outre déterminé pour chacune des pièces, l'instant de début d'accumulation de chaleur permettant à la température ambiante de la pièce d'atteindre la température accumulée avant coupure avant l'instant de début de réduction de rayonnement de la chaleur lorsque la température de la chaleur est augmentée avec la vitesse d'augmentation de température obtenue lors de l'étape de récupération, et
lors de l'étape d'action, chacun des dispositifs chauffants (31 à 36) est amené à débuter le rayonnement de chaleur à l'instant de d'accumulation de chaleur déterminé pour la pièce, et la quantité de rayonnement de chaleur est commandée pour permettre à la température ambiante de la pièce d'augmenter à la vitesse d'augmentation de température obtenue pour la pièce.

3. Procédé de commande de système de chauffage selon la revendication 2, dans lequel, lors de l'étape d'action, chacun des dispositifs chauffants (31 à 36) est en outre amené à rayonner de la chaleur pour permettre le maintien de la température ambiante de la pièce à la température accumulée avant coupure à partir du moment où la température ambiante de la pièce atteint la température accumulée avant coupure jusqu'à l'instant de début de réduction de rayonnement de la chaleur.

4. Procédé de commande de système de chauffage selon la revendication 2, dans lequel, lors de l'étape de détermination, l'instant de début d'accumulation de la chaleur est déterminé pour chacune des pièces pour permettre à la température ambiante de la pièce d'atteindre, à l'instant de début de réduction de rayonnement de la chaleur, la température accumulée avant coupure déterminée pour la pièce.

5. Procédé de commande de système de chauffage selon l'une quelconque des revendications 2 à 4,
dans lequel, lors de l'étape de récupération, la température ambiante de la pièce pendant la période d'accumulation de chaleur avant coupure est en outre obtenue pour chacune des pièces par unité de temps, et
lors de l'étape d'action, lorsque la température ambiante de la pièce obtenue lors de l'étape de récupération s'écarte, pendant la période d'accumulation de chaleur avant coupure, du changement de température ambiante déterminé à partir de la vitesse de gestion de la température, la quantité de rayonnement de chaleur est corrigée pour permettre à la température ambiante de la pièce de suivre de prêt le changement de température ambiante.

6. Procédé de commande de système de chauffage selon la revendication 5, dans lequel, lors de l'étape d'action, lorsque la température ambiante de la pièce obtenue lors de l'étape de récupération chute, pendant la période de réduction de rayonnement de la chaleur, en dessous du changement de température de pièce prédit lors de l'étape de prédiction, le dispositif chauffant (31 à 36) est en outre amené à rayonner de la chaleur pour permettre à la température ambiante de la pièce de suivre de prêt le changement de température ambiante.

7. Procédé de commande de système de chauffage selon l'une quelconque des revendications 1 à 6,
dans lequel chacune des températures cible des pièces est fixée pour être inférieure à une température préréglée du dispositif chauffant inclus dans la pièce, et
lors de l'étape d'action, chacun des dispositifs chauffants (31 à 36) est en outre amené à reprendre le rayonnement de la chaleur à l'instant de fin de réduction de rayonnement de la chaleur pour permettre à la température ambiante de la pièce d'augmenter de la température cible à la température préréglée.

8. Procédé de commande de système de chauffage selon l'une quelconque des revendications 1 à 7,
dans lequel, lors de l'étape de récupération, la température extérieure et chacune des températures des pièces sont de plus récupérées, et
lors de l'étape de prédiction, le changement de température ambiante pendant la période de réduction de rayonnement de la chaleur est prédit pour chacune des pièces sur la base (i) de la température extérieure et de la température ambiante obtenue lors de l'étape de récupération, et (ii) des performances d'isolement thermique de la pièce.

9. Procédé de commande de système de chauffage selon la revendication 8, dans lequel, lors de l'étape de détermination, la température accumulée avant coupure est déterminée sur la base du changement de la température ambiante prévue lors de l'étape de prédiction, ainsi que de la température cible.

10. Procédé de commande de système de chauffage selon l'une quelconque des revendications 1 à 9,
dans lequel chacun des dispositifs chauffants (31 à 36) inclut une soupape (202) qui augmente ou diminue la quantité de chaleur à fournir par la source de fourniture de chaleur (100), et
lors de l'étape d'action, la quantité de rayonnement de chaleur du dispositif chauffant (31 à 36) est commandée par le changement du degré d'ouverture de la soupape (202).

11. Système de chauffage commandant des dispositifs chauffants (31 à 36), dont chacun est prévu dans une pièce différente parmi plusieurs pour chauffer la pièce en é »mettant par rayonnement de la chaleur générée par une source de fourniture de chaleur (100), le système de chauffage étant **caractérisé en ce qu'**il comprend :
une unité de récupération (21) configurée pour récupérer, de la source de fourniture de chaleur (100), une instruction de réduction de rayonnement de la chaleur dans le but de réduire le rayonnement de chaleur des dispositifs chauffants pendant une période de réduction de rayonnement de la chaleur depuis un instant de début de réduction de rayonnement de la chaleur jusqu'à un instant de fin de réduction de rayonnement de la chaleur,
une unité de prédiction (22) configurée pour prédire un changement de température ambiante devant se produire pendant la période de réduction de rayonnement de la chaleur, pour chacune des pièces,
une unité de programmation du fonctionnement (23) configurée pour déterminer, sur la base du changement de la température ambiante prévue par l'unité de prédiction (22), une température accumulée avant coupure qui permet à la température ambiante de la pièce d'atteindre une température cible prédéterminée à l'instant de fin de réduction de rayonnement de la chaleur, la température accumulée avant coupure représentant la température ambiante de la pièce à l'instant de début de réduction de rayonnement de la chaleur, et
une unité de commande des dispositifs chauffants (24) configurée pour amener chacun des dispositifs chauffants (31 à 36) (i) à rayonner de la chaleur afin que la température ambiante de la pièce atteigne la température accumulée avant coupure déterminée pour la pièce par l'unité de planification du fonctionnement (23) pendant une période d'accumulation de chaleur avant coupure à partir du moment où l'instruction de réduction de rayonnement de la chaleur est obtenue jusqu'à l'instant de début de réduction de rayonnement de la chaleur, et (ii) à stopper le rayonnement de chaleur à l'instant de début de réduction de rayonnement de la chaleur.

12. Système de chauffage selon la revendication 11, comprenant :
une unité de commande de système de chauffage (214) incluant l'unité de récupération (21), l'unité de prédiction (22) et l'unité de programmation du fonctionnement (23), et
l'unité de commande des dispositifs chauffants (24) utilisée pour chacune des pièces.
